# EUROPÄISCHE PATENTSCHRIFT

(11) **EP 3 333 135 B1**
(45) Veröffentlichungstag und Bekanntmachung des Hinweises auf die Patenterteilung: **21.10.2020**
(21) Anmeldenummer: 17206182.2
(22) Anmeldetag: 08.12.2017
(51) Int. Cl.: C03B 23/04, C03B 23/18, B23K 26/00, B44C 1/22, B65C 3/02, C03C 23/00, B65C 9/00

(54) **VERFAHREN ZUM WEITERVERARBEITEN EINES GLASROHR-HALBZEUGS EINSCHLIESSLICH EINER THERMISCHEN UMFORMUNG**
METHOD OF PROCESSING A SEMI-FINISHED GLASS TUBE INCLUDING THERMAL FORMING
PROCÉDÉ DE TRAITEMENT ULTÉRIEUR D'UN DEMI-PRODUIT SOUS LA FORME DE TUBE DE VERRE, NOTAMMENT UN FORMAGE THERMIQUE

(30) Priorität: 08.12.2016 DE 102016123865
(43) Veröffentlichungstag der Anmeldung: 13.06.2018
(73) Patentinhaber: SCHOTT AG, 55122 Mainz (DE)
(72) Erfinder: Wirth, Dr. Andreas, 9055 Bühle (CH); Witzmann, Dr. André, 95679 Waldershof (DE); Trinks, Dr. Ulla, 95666 Mitterteich (DE)
(74) Vertreter: Fuchs Patentanwälte Partnerschaft mbB

(56) Entgegenhaltungen:
- US-A- 2 378 146
- US-A1- 2009 159 654
- US-A1- 2015 064 779

## Beschreibung

### GEBIET DER ERFINDUNG

Die vorliegende Erfindung betrifft allgemein die Weiterverarbeitung von Glasrohren zu Endprodukten, insbesondere Hohlglasprodukten, und betrifft insbesondere die Weiterverarbeitung von Glasrohren einschließlich einer thermischen Umformung zu Endprodukten bzw. Hohlglasprodukten, insbesondere zu eng tolerierten Endprodukten, wie beispielsweise Behältern zur Aufbewahrung von pharmazeutischen, medizinischen oder auch kosmetischen Substanzen, wie beispielsweise Vials, Karpulen oder Spritzenkörpern,

### STAND DER TECHNIK

Zur Weiterverarbeitung von Glasrohren müssen die Prozessparameter einer Weiterverarbeitungsanlage möglichst gut auf die Eigenschaften eines jeweiligen Glasrohrs eingestellt werden, um eine optimale Qualität von Endprodukten zu gewährleisten. Dies ist insbesondere zur Herstellung von eng tolerierten Endprodukten schwierig und aufwändig.

Zur Erhöhung der Qualität solcher Endprodukte werden nach dem Stand der Technik die relevanten Eigenschaften von Glasrohren bei einem weiterverarbeitenden Betrieb mittels geeigneter Messeinrichtungen ermittelt. Erst dann können die relevanten Prozessparameter entsprechend eingestellt werden. Dies verzögert nicht nur die Weiterverarbeitung von Glasrohren, sondern macht diese auch aufwändig und kostspielig.

Aus dem Stand der Technik sind diverse Verfahren zur Markierung und Codierung von Glasrohr-Halbzeugen bekannt. Diese werden jedoch nicht zur Codierung von Eigenschaften der Glasrohr-Halbzeuge in solcher Weise eingesetzt, dass die relevanten Daten direkt für einen weiterverarbeitenden Betrieb zur Verfügung stehen und direkt von diesem weiterverwendet werden können.

Zur Markierung oder Codierung von Glas sind aus dem Stand der Technik Verfahren bekannt, bei denen Markierungen oder dergleichen unmittelbar in das Glasmaterial eingeschrieben werden. Ein derartiges Verfahren ist beispielsweise in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Dabei wird das Glas abschnittsweise mit einem Laserpuls zur Aufbringung einer Markierung auf der Oberfläche beaufschlagt. Die Markierung ist deutlich sichtbar und kann insbesondere über eine von der Markierung ausgeübte Linsenwirkung zuverlässig ausgelesen werden, kann spannungsfrei bereits während der Herstellung bei hohen Temperaturen aufgebracht werden und eignet sich deshalb zum Aufbringen der Markierung bereits während der Herstellung von Glasrohr-Halbzeugen, also während der eigentlichen Rohrformgebung. Ein besonderer Vorteil dieses Verfahrens besteht darin, dass die Markierung bei Temperaturen oberhalb der Transformationstemperatur des Glases aufgebracht werden kann, ohne dass die Temperatur des Glasrohrstrangs nach der eigentlichen Rohrformgebung erneut auf derart hohe Temperaturen erhöht werden müsste. Mit dem Verfahren können Markierungen zur Bekämpfung der Produktpiraterie, aber auch Marken, Firmenlogos oder sonstige Produktausstattungen auf den Glasrohrstrang aufgebracht werden. Die Steuerung eines Prozessparameters beim Weiterverarbeiten eines Glasrohrs wird jedoch nicht offenbart.

Weitere Verfahren zur Markierung von Glas-Substraten sind in WO 2004 000749 A1 und WO 2009 128893 A1 offenbart.

DE 103 35 247 A1 offenbart ein Verfahren zur Schnittmusteroptimierung von Flachglas.

EP 2 818 454 A1 offenbart eine Glasbearbeitungsvorrichtung zum Herstellen von Glasbehältern aus einem Glasrohr-Halbzeug, einschließlich einer thermischen Umformung zur Ausbildung der Bodenbereiche der Glasbehälter. Eine Markierung, die in dem Glasrohr-Halbzeug oder unmittelbar auf dem Glasrohr-Halbzeug vorgesehen ist und zur Steuerung eines Prozessparameters beim Weiterverarbeiten einschließlich einer zumindest abschnittsweise durchgeführten thermischen Umformung in Abhängigkeit von rohrspezifischen Daten dient, die anhand der zumindest einen Markierung ausgelesen werden, wird nicht offenbart.

US 2378146 A offenbart ein Verfahren zur Herstellung von Neigungsmessgeräten für die Luftfahrt, die aus einem gebogenen, an beiden Enden abgeschmolzenen Glasrohr bestehen, in der ein Öl aufgenommen ist, in das eine Kugel eintaucht. Dabei werden Glasrohre auf eine Länge vorgeschnitten und durch thermische Umformung gebogen. Die Rohrstücke werden dann in eine Bearbeitungslehre gegeben, die exakt der Form des Endprodukts entspricht. Bei dem Verfahren wird eine Markierung aufgebracht, die eine Stelle angibt, an der das Rohrstück weiter abgeschnitten und dann abgeschmolzen wird.

US 2009 159654 A1 offenbart das Anbringen einer Markierung auf einem Pharmabehälter aus Glas.

US 2015 064779 A1 offenbart ein Verfahren und Vorrichtung zur Herstellung eines Rohrs mit einem abschnittsweise von einer Kreisform abweichenden Profil und kreisförmigen Endabschnitten. Hierzu wird ein Ausgangs-Glasrohr mit einem kreisförmigen Profil in einem zentralen Abschnitt in einem heißen, plastisch verformbaren Zustand entsprechend umgeformt und gemäß den äußeren und/oder inneren Abmessungen mit einer Markierung versehen.

### ZUSAMMENFASSUNG DER ERFINDUNG

Aufgabe der vorliegenden Erfindung ist es, ein verbessertes Verfahren zur Weiterverarbeitung von Glasrohr-Halbzeugen einschließlich einer thermischen Umformung derselben bereitzustellen, womit sich in einfacher und kostengünstiger Weise zuverlässig Endprodukte aus Glas, insbesondere Hohlglasprodukte, herstellen lassen, die insbesondere höheren Qualitätsanforderungen gerecht werden, insbesondere enger toleriert sein können.

Diese Aufgabe wird durch ein Verfahren zur Weiterverarbeitung von Glasrohr-Halbzeugen einschließlich einer thermischen Umformung derselben nach Anspruch 1 gelöst. Weitere vorteilhafte Ausführungsformen sind Gegenstand der rückbezogenen Unteransprüche.

Gemäß der vorliegenden Erfindung in Anspruch 1 wird ein Verfahren zum Weiterverarbeiten einer Mehrzahl von Glasrohr-Halbzeugen einschließlich einer zumindest abschnittsweise durchgeführten thermischen Umformung unter Steuerung durch eine elektronische Steuereinrichtung bereitgestellt, mit den Schritten: Bereitstellen der Mehrzahl von Glasrohr-Halbzeugen, wobei für jedes Glasrohr-Halbzeug rohrspezifische Daten bereitgestellt werden; Auslesen der rohrspezifischen Daten für ein jeweiliges Glasrohr-Halbzeug unter Steuerung durch die elektronische Steuereinrichtung; und Weiterverarbeiten der Mehrzahl von Glasrohr-Halbzeugen einschließlich einer zumindest abschnittsweise durchgeführten thermischen Umformung; wobei zumindest ein Prozessparameter beim Weiterverarbeiten eines jeweiligen Glasrohr-Halbzeugs einschließlich der zumindest abschnittsweise durchgeführten thermischen Umformung in Abhängigkeit von den rohrspezifischen Daten für das jeweilige Glasrohr-Halbzeug gesteuert wird. Erfindungsgemäß ist das jeweilige Glasrohr-Halbzeug mit zumindest einer Markierung gekennzeichnet, anhand der die rohrspezifischen Daten für das jeweilige Glasrohr-Halbzeug ausgelesen werden, wobei der zumindest eine Prozessparameter Prozessbedingungen beim Abtrennen von Unterabschnitten von einem Glasrohr-Halbzeug oder die Prozessbedingungen bei der Weiterverarbeitung eines von dem jeweiligen Glasrohr-Halbzeug abgetrennten Unterabschnitts oder Prozessbedingungen bei der thermischen Umformung des abgetrennten Unterabschnitts betrifft.

Dabei kann die zumindest eine Markierung mit dem jeweiligen Glasrohr-Halbzeug verbunden sein, etwa als Anhänger oder RFID-Tag, oder unmittelbar auf dem jeweiligen Glasrohr-Halbzeug aufgebracht (beispielsweise als Aufdruck, Aufkleber, RFID-Tag) oder eingebracht sein (beispielsweise als in das Glasmaterial eingeschriebene Markierung).

Wenn beispielsweise die rohrspezifischen Daten eines weiter zu verarbeitenden Glasrohr-Halbzeugs eine vergleichsweise dünne oder dicke Wandstärke anzeigen, so können die Prozessparameter bei der Weiterverarbeitung entsprechend geändert werden, sodass erfindungsgemäß Endprodukte mit praktisch den gleichen Eigenschaften wie bei der Herstellung aus einem Glasrohr-Halbzeug mit einer normalen Wandstärke hergestellt werden können. Entsprechendes gilt für alle relevanten Eigenschaften eines Ausgangs-Glasrohrs, einschließlich von geometrischen, physikalischen oder physikalisch-chemischen Eigenschaften.

Unter den rohrspezifischen Daten seien im Sinne der vorliegenden Erfindung grundsätzlich jegliche Eigenschaften eines Glasrohr-Halbzeugs verstanden, die einen Einfluss auf die Eigenschaften eines Endprodukts haben können und die durch geeignete Einstellung von Prozesspararnetern bei der Weiterverarbeitung eines Glasrohr-Halbzeugs auch beeinflusst werden können. Bei den Prozesspararnetern bei der Weiterverarbeitung eines Glasrohr-Halbzeugs handelt es sich dabei um die Prozessbedingungen beim Abtrennen von Unterabschnitten von einem Glasrohr-Halbzeug, wie beispielsweise Temperatur, Brennerleistung, Abstand des/der Brenner(s) vom Glasrohr-Halbzeug, Orientierung bzw. Ausrichtung des jeweiligen Brenners, Prozesszeiten, Prozesstaktung oder dergleichen, oder um die Prozessbedingungen bei der Weiterverarbeitung eines von dem jeweiligen Glasrohr-Halbzeug abgetrennten Unterabschnitts, wie beispielsweise Temperatur, Brennerleistung, Abstand des/der Brenner(s) vom jeweils abgetrennten Unterabschnitt, Orientierung bzw. Ausrichtung des jeweiligen Brenners, Prozesszeiten, Prozesstaktung, oder Prozessparameter bei der thermischen Umformung des abgetrennten Unterabschnitts, wie beispielsweise Anlegen eines Über- oder Unterdrucks, (abschnittsweises) Einpressen des abgetrennten Unterabschnitts in eine Form oder dergleichen, thermische Bedingungen beim Abkühlen, oder dergleichen.

Unter einer Steuerung dieser Prozessparameter kann im einfachsten Fall eine Einstellung dieser Prozessparameter entsprechend einer Nachschlagetabelle verstanden sein, in welcher in Zuordnung zu den relevanten Eigenschaften eines Glasrohr-Halbzeugs oder (abgetrennten) Unterabschnitts hiervon zugeordnete Prozessparameter hinterlegt sind, mit denen Endprodukte mit den gewünschten Eigenschaften hergestellt werden können. Eine solche Nachschlagetabelle kann insbesondere in einer Datenbank oder auf einem Datenträger hinterlegt sein, worauf eine Steuerungseinrichtung, beispielsweise ein Prozessor, einer Weiterverarbeitungsanlage Zugriff hat. Die Daten einer solchen Nachschlagetabelle können im einfachsten Falle auf Erfahrungsdaten beruhen, können jedoch auch das Ergebnis von Berechnungen oder numerischen Simulationen oder von entsprechenden Versuchsreihen sein, also wissensbasiert sein. Anhand der tatsächlich erzielten Qualität von Endprodukten kann grundsätzlich auch eine Rückkopplung auf die Daten einer solchen Nachschlagetabelle vorgesehen sein, damit zukünftig für Endprodukte eine noch bessere Qualität erzielt werden kann.

Die Steuerung dieser Prozessparameter kann selbstverständlich auch entsprechend mathematischen Formeln oder Berechnungen erfolgen, in welche die bereitgestellten rohrspezifischen Daten eingehen,

Die "Bereitstellung der rohrspezifischen Daten" im Sinne der vorliegenden Erfindung bedeutet insbesondere, dass ein weiterverarbeitender Betrieb die relevanten Eigenschaften eines jeweils zu verarbeitenden Glasrohr-Halbzeugs nicht erneut aufwändig ermitteln bzw. messen muss, sondern dass diese Daten dem weiterverarbeitenden Betrieb erfindungsgemäß vom Glasrohr-Hersteller in geeigneter Weise mittelbar oder unmittelbar zur Verfügung gestellt werden, was Aufwand und Kosten bei der Weiterverarbeitung von Glasrohren zu reduzieren hilft. Hierzu kann ein entsprechender Zugriff des weiterverarbeitenden Betriebs auf Daten des Herstellers des Glasrohrs vorgesehen sein, beispielsweise durch Zugriff auf eine von diesem betriebene Datenbank oder auf einen von diesem zur Verfügung gestellten Datenträger. Grundsätzlich können die Daten auch unmittelbar auf dem Glasrohr hinterlegt sein, beispielsweise in einer geeigneten Markierung, einem Aufkleber, einem RFID-Tag oder dergleichen. In jedem Fall kann der weiterverarbeitende Betrieb die relevanten rohrspezifischen Daten in einfacher Weise einlesen, ohne dass diese erneut aufwändig gemessen oder anderweitig bestimmt werden müssten.

Gemäß einer weiteren Ausführungsform werden die rohrspezifischen Daten jeweils für Unterabschnitte des Glasrohr-Halbzeugs einer vorbestimmten Länge in einer Längsrichtung des Glasrohr-Halbzeugs bereitgestellt, was insbesondere durch eine kontinuierlich oder abschnittsweise auf dem Glasrohr-Halbzeug vorgesehene Rohrstrangmarkierung bewerkstelligt werden kann. Die Länge dieser Unterabschnitte kann insbesondere auf die Länge von herzustellenden Endprodukten abgestimmt sein, einschließlich eines möglicherweise anfallenden Verschnitts oder dergleichen. Mit anderen Worten: für jedes herzustellende Endprodukt stehen für die Weiterverarbeitung des Glasrohr-Halbzeugs beim weiterverarbeitenden Betrieb exakte rohrspezifische Daten zur Verfügung, auf deren Grundlage dann individuell geeignete Prozessparameter für die Weiterverarbeitung eingestellt bzw. gesteuert werden können.

Gemäß einer weiteren Ausfiihrungsform werden die rohrspezifischen Daten für ein jeweiliges Glasrohr-Halbzeug gemittelt über eine Mehrzahl von Unterabschnitten des Glasrohr-Halbzeugs in einer Längsrichtung des Glasrohr-Halbzeugs bereitgestellt. Die Prozessparameter brauchen dann nicht für jeden Unterabschnitt des Glasrohr-Halbzeugs einzeln neu eingestellt bzw. gesteuert zu werden. Vielmehr genügt es, wenn die Prozessparameter für die Weiterverarbeitung sämtlicher Unterabschnitte eines jeweiligen Glasrohr-Halbzeugs auf den so ermittelten Mittelwert eingestellt werden.

Gemäß einer weiteren Ausführungsform wird das Glasrohr-Halbzeug weiterhin entsprechend den gemittelten rohrspezifischen Daten in eine von mehreren Klassen klassifiziert bereitgestellt. Vorteilhaft ist, dass mehrere Glasrohr-Halbzeuge ein und derselben Klasse mit denselben Prozessparametern weiterverarbeitet werden können, was die Weiterverarbeitung effektiver, zeitsparender, kostengünstiger und zuverlässiger macht.

Gemäß einer weiteren Ausführungsform betreffen die vorgenannten rohrspezifischen Daten geometrische Abmessungen des Glasrohr-Halbzeugs, insbesondere zumindest eine der folgenden Messgrößen für das Glasrohr-Halbzeug beinhaltend: Innendurchmesser; Außendurchmesser; Wanddicke; Krümmungsradius; Ovalität des Innendurchmessers; Ovalität des Außendurchmessers; eine Variation von zumindest einer der folgenden Messgrößen: Innendurchmesser; Außendurchmesser; Wanddicke; Krümmungsradius; Ovalität des Innendurchmessers; Ovalität des Außendurchmessers.

Gemäß einer weiteren Ausführungsform enthalten die rohrspezifischen Daten auch Information zur Qualität des Glasrohr-Halbzeugs, insbesondere zumindest eine der folgenden Informationen für das Glasrohr-Halbzeug: Zusammensetzung einer Glasschmelze, die zur Rohrformgebung des Glasrohr-Halbzeugs verwendet wurde; Homogenität der Glasschmelze, die zur Rohrformgebung des Glasrohr-Halbzeugs verwendet wurde; Prozessparameter zur Herstellung und zum Prozessieren der Glasschmelze, die zur Rohrformgebung des Glasrohr-Halbzeugs verwendet wurde; Einschlüsse in einer Wand des Glasrohr-Halbzeugs, einschließlich von Blasen, Knoten, kristallinen Bereichen und dergleichen.

Gemäß einer weiteren Ausführungsform ist das Glasrohr-Halbzeug mit zumindest einer Markierung gekennzeichnet, anhand bzw. aus der die rohrspezifischen Daten für das Glasrohr-Halbzeug (mittelbar bzw. unmittelbar) ausgelesen werden können. So kann die zumindest eine Markierung insbesondere eine Rohr-Identifizierungsinformation enthalten, anhand der die rohrspezifischen Daten für das Glasrohr-Halbzeug aus einem Datenspeicher oder einer Datenbank ausgelesen werden können, jeweils in Zuordnung zu einem Glasrohr-Halbzeug oder einem Unterabschnitt davon, das bzw. der durch die jeweilige Rohr-Identifizierungsinformation identifiziert ist. Die Bereitstellung der rohrspezifischen Daten erfolgt somit mittelbar, nämlich über den Datenspeicher, die Datenbank oder dergleichen, was einfach und kostengünstig in die Prozesse eines weiterverarbeitenden Betriebs integriert werden kann.

Die rohrspezifischen Daten für das Glasrohr-Halbzeug können jedoch auch in weiteren Markierungen auf dem Glasrohr-Halbzeug oder in zumindest einem weiteren Markierungsabschnitt der zumindest einen Markierung auf dem Glasrohr-Halbzeug enthalten sein. Die Bereitstellung der rohrspezifischen Daten kann somit unmittelbar erfolgen, also mittels der in die weitere Markierung bzw. in den weiteren Markierungsabschnitt eingeschriebenen Information zu dem jeweiligen Glasrohr-Halbzeug bzw. zu einem jeweiligen Unterabschnitt hiervon.

Gemäß einer weiteren Ausführungsform kann die zumindest eine Markierung mittels eines der folgenden Verfahren auf das jeweilige Glasrohr-Halbzeug aufgebracht werden: Aufbringen, insbesondere Aufdrucken, eines Balkencodes, einer Strichmarkierung oder Matrixcode-Markierung oder dergleichen, welche die rohrspezifischen Daten oder einen Datenlink auf diese codiert; Aufkleben eines Aufklebers, welcher die rohrspezifischen Daten oder einen Datenlink auf diese codiert; Anbringen eines RFID-Tags an dem Glasrohr-Halbzeug, welcher die rohrspezifischen Daten oder einen Datenlink auf diese codiert.

Gemäß einer alternativen Ausführungsform kann die zumindest eine Markierung durch Wechselwirken eines Laserstrahls mit dem Glas des Glasrohr-Halbzeugs erzeugt werden. Grundsätzlich kann die Laserbeschriftung bei Temperaturen unterhalb der Transformationstemperatur erzeugt werden. Das gilt insbesondere für Beschriftungen, die auf dem Endprodukt nicht mehr vorhanden sind. In diesem Fall muss die Laserbeschriftung z.B. bezüglich Bruchfestigkeit nicht die Anforderungen erfüllen, die an das Endprodukt gestellt werden.

Gemäß einer weiteren Ausführungsform kann die zumindest eine Markierung durch Wechselwirken eines Laserstrahls mit dem Glas des Glasrohr-Halbzeugs bei Temperaturen oberhalb der Transformationstemperatur des Glases in eine Wand des Glasrohr-Halbzeugs eingebracht sein, insbesondere als digitaler Matrix-Code (DMC). Vorteilhaft ist, dass diese Information nachträglich praktisch nicht mehr verfälscht werden kann, und dass derartige Markierungen in einfacher und kostengünstiger Weise ausgelesen werden können, insbesondere optisch und berührungsfrei, was sich einfach in die Prozesse integrieren lässt, die bei einem weiterverarbeitenden Betrieb üblicherweise ausgeführt werden.

Gemäß einer weiteren Ausführungsform wird zum Ausführen des Verfahrens, insbesondere zu Beginn bei einem weiterverarbeitenden Betrieb, beispielsweise bei einer Wareneingangskontrolle, stichprobenweise zumindest ein Glasrohr-Halbzeug vor dem Weiterverarbeiten ausgemessen und bewertet. Die so gemessenen Größen und Bewertungsdaten werden mit den für das jeweilige Glasrohr-Halbzeug bereitgestellten rohrspezifischen Daten verglichen, um eine Abweichungsinformation zu ermitteln, wobei der zumindest eine Prozessparameter, der beim Weiterverarbeiten einer Mehrzahl von Glasrohr-Halbzeugen einschließlich der zumindest abschnittsweise durchgeführten thermischen Umformung verwendet wird, in Abhängigkeit von den rohrspezifischen Daten für die jeweiligen Glasrohr-Halbzeuge unter Berücksichtigung der ermittelten Abweichungsinformation gesteuert bzw. eingestellt wird. Insbesondere können so durch stichprobenweise Ausmessung von Glasrohren etwaige systematische Abweichungen zwischen den bereitgestellten rohrspezifischen Daten und den tatsächlichen rohrspezifischen Daten zuverlässig bestimmt und anschließend korrigiert werden. Auf diese Weise lassen sich beispielsweise systematische Messfehler oder vom Hersteller des Glasrohr-Halbzeugs "beschönigte" rohrspezifische Daten auf der Seite eines weiterverarbeitenden Betriebs in einfacher Weise zuverlässig korrigieren und vermeiden.

Gemäß einer weiteren Ausführungsform umfasst das Weiterverarbeiten des Glasrohr-Halbzeugs ein lokales Erwärmen eines Abschnittes des Glasrohr-Halbzeugs und ein Abtrennen eines Behälters durch Abtrennen eines Abschnittes von dem Glasrohr-Halbzeug im Bereich des lokal erwärmten Abschnittes unter Ausbildung eines Bodens des Behälters. Der Boden kann dabei insbesondere durch Zusammensacken und Verschmelzen von noch hinreichend plastischen Wandabschnitten ausgebildet werden, was längliche Endprodukte bzw. Hohlglasprodukte mit zumindest einem geschlossenen Ende ergibt. Anhand der rohrspezifischen Daten können dabei insbesondere Prozessparameter gesteuert oder geeignet eingestellt werden, die das lokale Erwärmen des Abschnittes des Glasrohr-Halbzeugs und das Abtrennen des Behälters beeinflussen, insbesondere Brennerleistungen und eine axiale Verstellung von Halteabschnitten einer Weiterverarbeitungsanlage, die zum (auch vorübergehenden) Halten von Abschnitten des Glasrohr-Halbzeugs dienen.

Gemäß einer weiteren Ausführungsform wird beim Abtrennen des Behälters von dem Glasrohr-Halbzeug weiterhin ein Hals bzw. verengter Halsabschnitt des Behälters vorgeformt, wobei der Behälter von einer Haltevorrichtung kopfüber aufgenommen wird und sich der Boden des Behälters allmählich von dem Glasrohr-Halbzeug durch Zusammensacken einer Wand des Glasrohrs ausbildet.

Gemäß einer weiteren Ausführungsform ist weiterhin eine weitere Bearbeitung des Bodens des Behälters vorgesehen, mit zumindest einem der folgenden Schritte: Bearbeiten des Bodens des Behälters mit mindestens einem Brenner, um den Boden grob zu formen; weitere Bearbeitung des Bodens mit mindestens einem Brenner, um den Boden flach zu formen; Pressen des Bodens in eine Formmatrix unter Aufwenden eines Gasdrucks, insbesondere im Bereich 0,5 bis 3,0 bar, um den Boden final zu formen; Abkühlen des Bodens. Anhand der rohrspezifischen Daten können dabei insbesondere Prozessparameter gesteuert oder geeignet eingestellt werden, die einen oder mehrere dieser weiteren Verfahrensschritte betreffen.

Gemäß einer weiteren Ausführungsform umfasst das Weiterverarbeiten des Glasrohr-Halbzeugs weiterhin ein Aussortieren oder vorübergehendes Zwischenspeichern eines Glasrohr-Halbzeugs, wenn auf Grundlage der rohrspezifischen Daten für das Glasrohr-Halbzeug ermittelt wird, dass das Weiterverarbeiten des Glasrohr-Halbzeugs mit aktuellen Prozessparametern nicht möglich ist. Auf diese Weise können insbesondere Klassen von Glasrohr-Halbzeugen mit jeweils gleichen oder vergleichbaren relevanten Eigenschaften gebildet werden, wobei dann ganze Klassen solcher Glasrohr-Halbzeuge (oder von davon abgetrennten und zwischengespeicherten Unterabschnitten von diesen) gebildet werden können und diese Klassen dann bei der Weiterverarbeitung zum Endprodukt mit identischen oder mit im Wesentlichen gleichen Prozessparametern weiterverarbeitet werden können. Vorteilhaft ist, dass die relevanten Prozessparameter dann nicht so häufig verändert werden müssen, was weitere Vorteile bei der Weiterverarbeitung ermöglicht. Nach dem vorübergehenden Zwischenspeichern kann eine neue Klasse dann insbesondere mit einmalig geänderten Prozessparametern, die auf Grundlage der rohrspezifischen Daten für das Glasrohr-Halbzeug ermittelt werden, weiterverarbeitet werden.

Gemäß einer weiteren Ausführungsform ist das Endprodukt nach der Weiterverarbeitung ein Behälter zur Aufnahme von pharmazeutischen, medizinischen oder kosmetischen Substanzen, insbesondere ein Vial, eine Karpule oder ein Spritzenkörper. Allgemeiner ist das Endprodukt ein Hohlglasprodukt der vorgenannten Art, das zweckmäßig zumindest eine Öffnung zum Einfüllen einer Substanz aufweist.

Gemäß einer weiteren Ausführungsform wird der Behälter mit einer Markierung zur Rückverfolgung und/oder für eine Entscheidung zu einer Originalität, insbesondere Authentizität, oder Herkunft des Behälters markiert. Anhand einer solchen Markierung lässt sich mittels Rückverfolgung im Rahmen einer Qualitätssicherung eine höhere Qualität von Endprodukten gewährleisten. Die Markierung kann jedoch zusätzlich auch zur Ermittlung einer Originalität, insbesondere Authentizität, oder Herkunft eines Behälters verwendet werden.

### FIGURENÜBERSICHT

Nachfolgend wird die Erfindung in beispielhafter Weise und unter Bezugnahme auf die beigefügten Zeichnungen beschrieben, woraus sich weitere Merkmale, Vorteile und zu lösende Aufgaben ergeben werden. Es zeigen:
- Fig. 1a: ein erstes Ausführungsbeispiel für ein Glasrohr-Halbzeug gemäß der vorliegenden Erfindung mit daran vorgesehenen Markierungen, die rohrspezifische Daten codieren;
- Fig. 1b: ein zweites Ausführungsbeispiel für ein Glasrohr-Halbzeug gemäß der vorliegenden Erfindung mit einer vergrößerten Darstellung einer daran vorgesehenen Markierung, die rohrspezifische Daten codiert;
- Fig. 1c: ein drittes Ausführungsbeispiel für ein Glasrohr-Halbzeug gemäß der vorliegenden Erfindung mit einer daran vorgesehenen Markierung, die rohrspezifische Daten mittelbar codiert;
- Fig. 2a: in einem schematischen Diagramm eine Vorrichtung zum Kennzeichnen eines Glasrohr-Halbzeugs mit rohrspezifischen Daten und eine Anlage zum Weiterverarbeiten eines Glasrohr-Halbzeugs einschließlich einer thermischen Umformung desselben, um ein Verfahren gemäß der vorliegenden Erfindung auszuführen;
- Fig. 2b: eine Datenbank, die rohrspezifische Daten für eine Mehrzahl von Glasrohr-Halbzeugen speichert;
- Fig. 3a: ein schematisches Flussdiagramm eines ersten Ausführungsbeispiels eines Verfahrens zum Weiterverarbeiten eines Glasrohr-Halbzeugs gemäß der vorliegenden Erfindung zur Herstellung eines Endprodukts;
- Fig. 3b: ein schematisches Flussdiagramm eines zweiten Ausführungsbeispiels eines Verfahrens zum Weiterverarbeiten eines Glasrohr-Halbzeugs gemäß der vorliegenden Erfindung zur Herstellung eines Endprodukts; und
- Fig. 4: ein Vergleichsbeispiel eines Verfahrens zum Weiterverarbeiten eines Glasrohr-Halbzeugs zur Herstellung eines Endprodukts.

In den Figuren bezeichnen identische Bezugszeichen identische oder im Wesentlichen gleichwirkende Elemente oder Gruppen von Elementen.

### AUSFÜHRLICHE BESCHREIBUNG VON AUSFÜHRUNGSBEISPIELEN

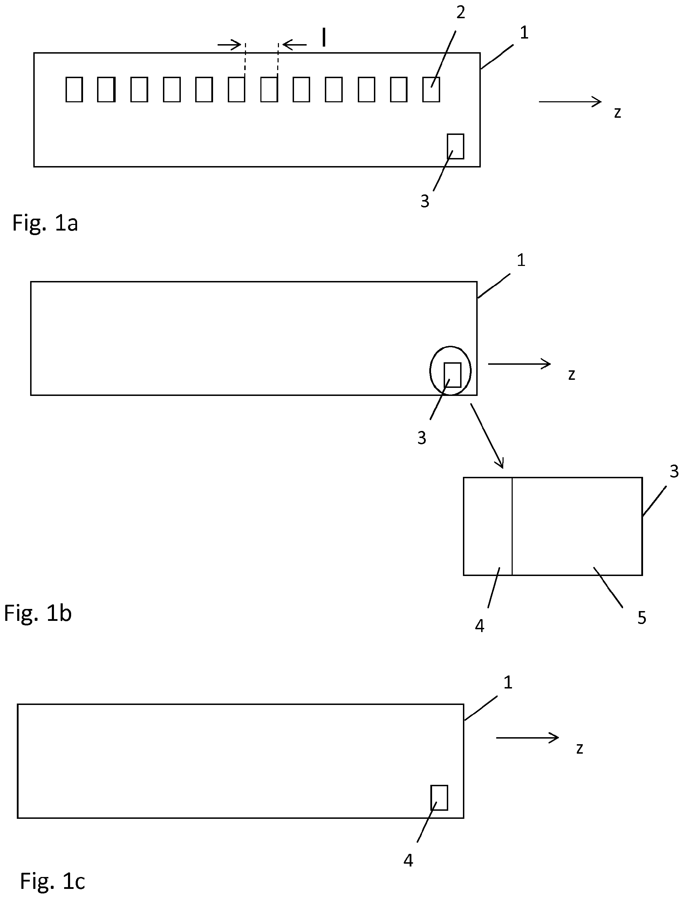

Fig. 1a zeigt ein erstes Ausführungsbeispiel für ein Glasrohr-Halbzeug gemäß der vorliegenden Erfindung mit daran vorgesehenen Markierungen. Unter einem Glasrohr-Halbzeug im Sinne der vorliegenden Erfindung sei insbesondere ein vorgefertigtes Glasrohr mit vorbestimmten Dimensionen und Eigenschaften verstanden, das als Ausgangs-Werkstück für eine Weiterverarbeitung zu Endprodukten aus Glas, insbesondere zu Hohlglasprodukten, dient. Solche Glasrohr-Halbzeuge werden üblicherweise in vorbestimmten Längen von beispielsweise 1,5 m ausgeliefert, wobei ein Rohrende oder bevorzugt beide Rohrenden bei der Auslieferung an einen weiterverarbeitenden Betrieb verschlossen sind, um ein unerwünschtes Eindringen von Verunreinigungen in das Innere des Glasrohr-Halbzeugs zu verhindern. Hierzu kann das zumindest eine Ende des Glasrohr-Halbzeugs 1 auch durch thermische Umformung vollständig verschlossen sein.

Bei der Herstellung des Glasrohr-Halbzeugs 1 wird auf das Glasrohr 1 fortwährend eine Rohrstrangmarkierung 2 aufgebracht, die jeweils rohrspezifische Daten für einen jeweiligen Unterabschnitt einer Länge 1 des Glasrohr-Halbzeugs 1 enthält, wie nachfolgend ausgeführt. An dem Glasrohr-Halbzeug 1 ist weiterhin eine zweite Markierung 3 getrennt von der Rohrstrangmarkierung 2 vorgesehen, die eine Rohr-Identifizierungsinformation zur Identifizierung des Glasrohr-Halbzeugs 1 enthält, bevorzugt eine Rohr-ID, Rohr-Seriennummer oder dergleichen. Weiterhin können in der zweiten Markierung auch Angaben zu Hersteller, Produktionsort und/oder Produktionsanlage des Glasrohrs 1 angezeigt werden. Die Rohrstrangmarkierung kann grundsätzlich bis zum Endprodukt (beispielsweise Pharmabehälter) unverändert erhalten bleiben. Die Informationen zu dem Glasrohr-Halbzeug 1 sind in den Markierungen 2, 3 bevorzugt nicht in Klarschrift enthalten, sondern erst entsprechend einer vorbestimmten Rechen- oder Decodierungsanweisung auslesbar.

Gemäß der Fig. 1a sind die Rohrstrangmarkierungen 2 in der Längsrichtung (z) des Glasrohrs bevorzugt unter vorbestimmten, konstanten Abständen (1) zueinander auf dem Glasrohr 1 angebracht. Diese Abstände 1 können beispielsweise abgestimmt sein auf die zu erwartenden Längen derjenigen Abschnitte, aus denen später die Endprodukte (beispielsweise Pharmabehälter) hergestellt werden sollen und die hierzu von einem Original-GlasrohrHalbzeug abgelängt werden müssen, einschließlich etwaigen Verschnitts und abzutrennender Abschnitte.

Die Fig. 1b zeigt ein zweites Ausführungsbeispiel für ein Glasrohr-Halbzeug gemäß der vorliegenden Erfindung mit einer vergrößerten Darstellung einer daran vorgesehenen Markierung. Gemäß der Fig. 1b ist statt der räumlich getrennt aufgebrachten ersten und zweiten Markierung auf dem Glasrohr-Halbzeug 1 an einer vorbestimmten Stelle, beispielsweise an einem vorderen oder hinteren Ende des Glasrohr-Halbzeugs 1, eine Kombinations-Markierung 3 vorgesehen, die zumindest eine erste und eine zweite Information 4, 5 enthält, die bevorzugt in unmittelbarer Nähe zueinander angeordnet sind. Während die erste Information 4 eine Rohr-Identifizierungsinformation beinhaltet, codiert die zweite Information 5 rohrspezifische Daten für das jeweilige Glasrohr-Halbzeug 1, wenn erwünscht auch für die einzelnen Unterabschnitte in Längsrichtung des Glasrohr-Halbzeugs 1 (vgl. Fig. 1a), wie nachfolgend ausgeführt. Oder die zweite Information 5 codiert einen Datenlink auf diese rohrspezifischen Daten, sodass diese mittelbar z.B. aus einer Datenbank unter Verwendung dieses Datenlinks ausgelesen werden können.

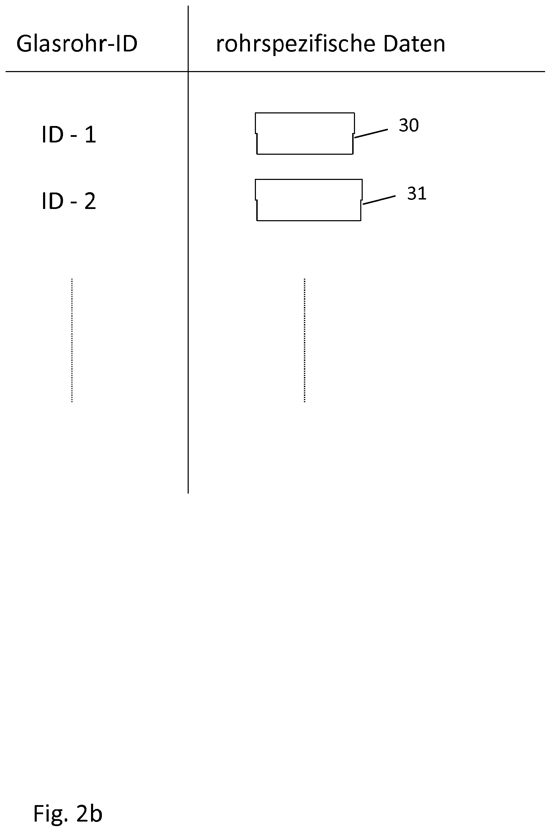

Die Fig. 1c zeigt ein drittes Ausführungsbeispiel für ein Glasrohr-Halbzeug gemäß der vorliegenden Erfindung mit einer daran vorgesehenen Markierung, die rohrspezifische Daten mittelbar codiert. Hierzu codiert die Markierung 4 eine Rohr-Identifizierungsinformation, die ein Glasrohr-Halbzeug 1 eineindeutig kennzeichnet, einschließlich sämtlicher notwendiger Angaben, um das erfindungsgemäße Verfahren auszuführen, wie nachfolgend ausgeführt. Hierzu kann es ausreichend sein, wenn anhand einer in der Markierung 4 codierten Rohr-Identifizierungsinformation oder anhand eines von der Markierung 4 codierten Datenlinks die relevanten rohrspezifischen Daten mittelbar aus einer Datenbank ausgelesen werden können, wie nachfolgend anhand der Fig. 2b ausführlicher beschrieben.

Im Sinne der vorliegenden Erfindung betreffen die rohrspezifischen Daten zumindest geometrische Abmessungen des jeweils weiter zu verarbeitenden Glasrohr-Halbzeugs, insbesondere zumindest eine der folgenden Größen für das Glasrohr-Halbzeug, die für ein jeweiliges Glasrohr-Halbzeug gemessen werden: Innendurchmesser; Außendurchmesser; Wanddicke; Krümmungsradius; Ovalität des Innendurchmessers; Ovalität des Außendurchmessers; eine Variation von zumindest einer der folgenden Messgrößen: Innendurchmesser; Außendurchmesser; Wanddicke; Krümmungsradius; Ovalität des Innendurchmessers; Ovalität des Außendurchmessers.

Die rohrspezifischen Daten können weiterhin auch Information zur Qualität des Glasrohr-Halbzeugs enthalten und insbesondere zumindest eine der folgenden Informationen für das Glasrohr-Halbzeug beinhalten: Zusammensetzung einer Glasschmelze, die zur Rohrformgebung des Glasrohr-Halbzeugs verwendet wurde; Homogenität der Glasschmelze, die zur Rohrformgebung des Glasrohr-Halbzeugs verwendet wurde; Prozessparameter zur Herstellung und zum Prozessieren der Glasschmelze, die zur Rohrformgebung des Glasrohr-Halbzeugs verwendet wurde; Einschlüsse in einer Wand des Glasrohr-Halbzeugs, einschließlich von Blasen, Knoten, kristallinen Bereichen und dergleichen.

Im Sinne der vorliegenden Erfindung werden diese rohrspezifischen Daten dazu verwendet, um bei einem Weiterverarbeiten des Glasrohr-Halbzeugs einschließlich einer zumindest abschnittsweise durchgeführten thermischen Umformung zumindest einen Prozessparameter in Abhängigkeit von den rohrspezifischen Daten für das jeweilige Glasrohr-Halbzeug zu steuern, wie nachfolgend ausführlicher dargelegt.

Abhängig vom Zeitpunkt des Aufbringens der Markierungen 3-5 ist auch das zum Markieren eingesetzte Verfahren gewählt. So kann es ausreichend sein, wenn die Markierungen 3-5 bei Temperaturen unterhalb einer Transformationstemperatur des Glases aufgebracht werden, beispielsweise mittels einer Lasermarkierung, durch Aufdrucken einer Markierung, beispielsweise eines Balkencodes oder einer Strich- oder Matrixcode-Markierung, welche die rohrspezifischen Daten oder einen Datenlink auf diese codiert. Die rohrspezifischen Daten oder ein Datenlink auf diese können auch in einem Aufkleber codiert sein, der an geeigneter Stelle auf das Glasrohr-Halbzeug 1 aufgeklebt wird und nach einem Auslesen der relevanten Informationen vor der Weiterverarbeitung des Glasrohr-Halbzeugs 1 wieder entfernt wird. Oder die rohrspezifischen Daten oder ein Datenlink auf diese können in einem RFID-Tag codiert sein, der an geeigneter Stelle auf dem Glasrohr-Halbzeug 1 vorgesehen ist und nach einem berührungslosen Auslesen der relevanten Informationen mittels rf-Signalen vor der Weiterverarbeitung wieder entfernt wird.

Die Markierungen 3-5 oder Teile hiervon können jedoch auch bei Temperaturen oberhalb der Transformationstemperatur des Glases erzeugt werden, bevorzugt in Gestalt eines digitalen Matrix-Codes (DMC) mittels eines Verfahrens, wie in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Die vorgenannten Daten, insbesondere rohrspezifische Daten, können dabei in Klarschrift (unverschlüsselt) oder mittels einer vorbestimmten Codierung aufgebracht werden.

Während die Rohrstrangmarkierung 2 grundsätzlich bis zum Endprodukt bzw. Hohlglasprodukt (beispielsweise Pharmabehälter) unverändert erhalten bleiben kann, werden die vorgenannten weiteren Markierungen bei der Weiterverarbeitung des Glasrohr-Halbzeugs 1 zu dem Endprodukt bei einem weiterverarbeitenden Betrieb wieder entfernt, wobei ggf. beim weiterverarbeitenden Betrieb gemäß einer vorbestimmten Rechen- oder Codierungsvorschrift und unter Beibehaltung des Informationsgehalts der weiteren Markierungen eine neue Markierung aufgebracht wird, die eine Rückverfolgbarkeit des Glasrohr-Halbzeugs oder eine Entscheidung zur Originalität, insbesondere Authentizität, oder einer Herkunft des Endprodukts ermöglicht.

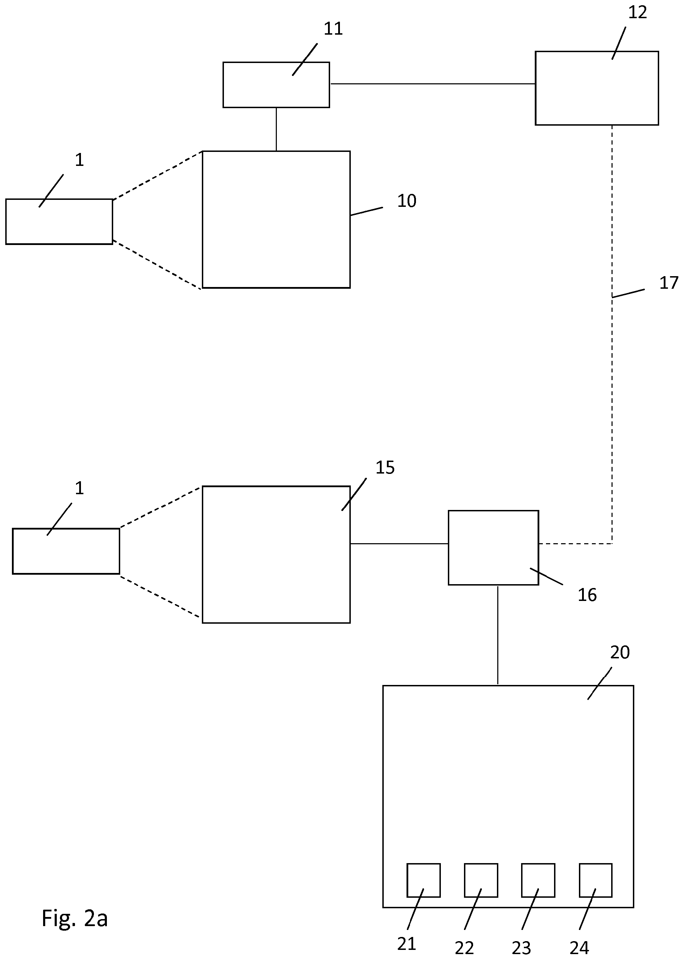

Die Fig. 2a zeigt in einem schematischen Diagramm eine Vorrichtung zum Kennzeichnen eines Glasrohr-Halbzeugs mit rohrspezifischen Daten und eine Anlage zum Weiterverarbeiten eines Glasrohr-Halbzeugs einschließlich einer zumindest abschnittsweise durchgeführten thermischen Umformung desselben, um ein Verfahren gemäß der vorliegenden Erfindung auszuführen. Im oberen Bildteil der Fig. 2a ist eine Vorrichtung zum Aufbringen einer Markierung auf dem Glasrohr-Halbzeug dargestellt, einschließlich von rohrspezifischen Daten, einer Rohr-Identifizierungsinformation und weiteren Informationen. Dabei sei zugrunde gelegt, dass die Markierung mittels eines digitalen Matrix-Codes (DMC) und mittels eines Verfahrens, wie in US 2003 0029849 A1, DE 102 34 002 A1 und WO 2012 028611 A1 der Anmelderin offenbart, auf dem Glasrohr-Halbzeug aufgebracht wird. Hier werden zunächst rohrspezifische Daten, wie vorstehend ausgeführt, für das Glasrohr-Halbzeug 1 mittels einer Messeinrichtung 10 ermittelt. Dabei können die rohrspezifischen Daten auch für eine Mehrzahl von Unterabschnitten ermittelt werden, die entlang der Längsrichtung des Glasrohr-Halbzeugs beabstandet zueinander angeordnet sind, vorzugsweise unter konstanten Abständen zueinander, wie in der Fig. 1a gezeigt. Nach Erfassung der rohrspezifischen Daten werden diese entweder in einer externen Datenbank 12 gespeichert oder zum Beispiel auf einem Datenträger, wie beispielsweise einer Daten-CD, abgelegt. Dies erfolgt dabei stets in Zuordnung zu Information, die eine eineindeutige Identifizierung des jeweiligen Glasrohr-Halbzeugs erlaubt, insbesondere einer Seriennummer des Glasrohr-Halbzeugs oder einer Rohr-Identifizierungsinformation (nachfolgend auch als Rohr-ID bezeichnet). Die rohrspezifischen Daten können so zu einem späteren Zeitpunkt mittelbar wieder abgefragt und ausgelesen werden.

Alternativ oder ergänzend können die rohrspezifischen Daten oder zumindest wesentliche Teile davon, die zur Festlegung geeigneter Prozessparameter zur späteren Weiterverarbeitung des Glasrohr-Halbzeugs 1 geeignet sind, auch mittels einer Markierungseinrichtung, die auch Teil der Messeinrichtung 10 sein kann, unmittelbar auf dem jeweiligen Glasrohr-Halbzeug 1 aufgebracht werden, beispielsweise mittels Markierungen, wie vorstehend anhand der Figuren 1a-1c beschrieben. Insbesondere kann die Markierung mit den rohrspezifischen Daten mittels eines digitalen Matrix-Codes (DMC) und mittels eines Verfahrens, wie in US 2003 0029849 A1, DE 102 34 002 A1 und WO 2012 028611 A1 der Anmelderin offenbart, auf dem Glasrohr-Halbzeug aufgebracht werden. Die rohrspezifischen Daten können allerdings auch in anderer Weise auf dem Glasrohr-Halbzeug aufgebracht werden, insbesondere mittels eines sog. RFID-Tags.

Gemäß der Fig. 2a erfolgt die Messung bzw. Ermittlung der rohrspezifischen Daten und/oder die Markierung des Glasrohr-Halbzeugs 1 unter der zentralen Steuerung einer Steuerungseinrichtung 11, die auch mit der Datenbank 12 verbunden sein kann, um Daten in diese einzuschreiben und/oder aus dieser auszulesen.

Im unteren Bildteil der Fig. 2a ist schematisch eine Vorrichtung 20 zur Weiterarbeitung von Glasrohr-Halbzeugen einschließlich einer zumindest abschnittsweise durchgeführten thermischen Umformung dargestellt. Diese Vorrichtung wird typischerweise von einem weiterverarbeitenden Betrieb betrieben, der Glasrohr-Halbzeuge 1 einkauft und diese zu Endprodukten, insbesondere Hohlglasprodukten, weiter verarbeitet, insbesondere zu Glasbehältern, beispielswiese zu Glasbehältern zur Aufbewahrung von Substanzen für pharmazeutische, medizinische oder auch kosmetische Zwecke. Die Vorrichtung 20 wird von einer Steuerungseinrichtung 16 gesteuert, insbesondere einem Prozessor, der mit einer Ausleseeinrichtung 15 verbunden ist, um zumindest eine Markierung von dem Glasrohr-Halbzeug 1 auszulesen, wie vorstehend anhand der Figuren 1a-1c beschrieben, anhand der die rohrspezifischen Daten für das jeweilige Glasrohr-Halbzeug 1 mittelbar beispielsweise aus einer Datenbank 12 (über das Netzwerk 17, beispielsweise ein unternehmensinternes Computer-Netzwerk oder das Netzwerk, insbesondere über eine gesicherte Datenkommunikationsverbindung) oder von einem Datenträger ausgelesen werden. Die Ausleseeinrichtung 15 kann die rohrspezifischen Daten für das jeweilige Glasrohr-Halbzeug 1 jedoch auch unmittelbar aus der Markierung auf dem jeweiligen Glasrohr-Halbzeug auslesen, beispielsweise durch Auslesen einer optischen Markierung auf dem jeweiligen Glasrohr-Halbzeug 1 oder durch Auslesen eines RFID-Tags. Die rohrspezifischen Daten werden der Vorrichtung 20 über eine gemeinsame Steuerungseinrichtung 16 zur Verfügung gestellt.

Bei der Vorrichtung 20 zur Weiterverarbeitung von Glasrohr-Halbzeugen und zur Herstellung von Glasbehältern kann es sich insbesondere um eine aus der EP 2 818 454 A1 der Anmelderin bekannte Vorrichtung handeln, die eine Muttermaschine und eine nachgeordnete Bodenmaschine umfasst, mit einer Mehrzahl von Bearbeitungsstationen zum Ausführen von Bearbeitungsschritten, die in der Fig. 2a allgemein als Untereinheiten 21-24 bezeichnet sind, wobei deren konkrete Anzahl ausdrücklich nicht auf die nur vier dargestellten Untereinheiten 24-24 beschränkt sein soll. Zur Herstellung von Glasbehältern wird dabei zunächst ein Glasrohr an einer Halteeinheit der Muttermaschine angebracht, welches dann durch Drehen der Muttermaschine in die verschiedenen Bearbeitungspositionen gebracht wird, um vorbearbeitet zu werden. Danach wird das Glasrohr in einem Trennprozess getrennt und die dabei entstehenden Glasbehälter werden an eine Halteeinheit der nachgeordneten Bodenmaschine übergeben, um dort an verschiedenen Bearbeitungspositionen weiter bearbeitet zu werden. An den Bearbeitungspositionen der Bodenmaschine werden beispielsweise verschiedene Schritte zur geeigneten Formung des Bodens eines Glasbehälters vorgenommen. Hierbei wird, insbesondere durch verschiedene Heissformgebungsprozesse und rasche Drehung der entstehenden Glasbehälter, ein flacher Behälter-Boden erzeugt, welcher während des Prozesses wegen der vorherrschenden hohen Temperaturen eine vergleichsweise niedrige Viskosität aufweist.

Zur Herstellung von Glasfläschchen (Vials) ist beispielsweise an den verschiedenen Bearbeitungspositionen der nachgeordneten sog. Bodenmaschine eine Vielzahl von Brennern angeordnet. Sowohl die nachgeordnete Bodenmaschine als auch die stromaufwärts befindliche Muttermaschine bestehen aus einem Rotor-Anteil und einem Stator-Anteil, wobei sich die Rotor-Anteile während eines Produktionszyklus einmal um die eigene Achse drehen. Die Bearbeitungspositionen der Bodenmaschine dienen der Bodenformung der von dem Glasrohr abgetrennten Glasfläschchen und umfassen mindestens einen Trennschritt, an dem die eigentliche Trennung der Glasfläschchen von dem Glasrohr erfolgt, einen ersten Bodenformungsschritt, einen zweiten Bodenformungsschritt, einen dritten Bodenformungsschritt, einen Matrizen-Bodenformungsschritt, einen Bodenkühlungs-Schritt, einen Entnahme-Schritt und einen Leer-Schritt. In all diesen Bearbeitungsschritten werden die Glasfläschchen kopfüber gehalten. Im Einzelnen werden in den zuvor beschriebenen Bearbeitungsschritten die folgenden Bearbeitungsvorgänge getaktet nacheinander ausgeführt:

Im Trennschritt werden die entstehenden Glasfläschchen, deren Hals schon geformt ist, zunächst von einer Haltevorrichtung der Bodenmaschine kopfüber aufgenommen, um dann von dem Glasrohr abgetrennt zu werden, wobei sich der Boden allmählich beim Abtrennen der Glasfläschchen von dem Glasrohr und beim Zusammensacken der Wandung des Glasrohrs ausbildet. Im ersten Bodenformungsschritt werden die Böden der Glasfläschchen mit mindestens einem Brenner bearbeitet, um die Böden der Glasfläschchen grob zu formen. Im zweiten Bodenformungsschritt werden die Böden der Glasfläschchen mit mindestens einem Brenner weiterbearbeitet, um die Böden der Glasfläschchen flach zu formen. Im dritten Bodenformungsschritt werden die Böden der Glasfläschchen mit mindestens einem Brenner weiterbearbeitet, um die schon geformten Böden der Glasfläschchen weiter zu verfeinern. Im Matrizen-Bodenformungsschritt werden die Böden der Glasfläschchen, unter Aufwenden eines relativ hohen Gasdrucks (bevorzugter Weise 0,5 bis 3,0 bar) in eine Formmatrix gepresst, um die Böden final zu formen. Im Bodenkühlungs-Schritt werden die Böden der Glasfläschchen schließlich abgekühlt. Im Entnahme-Schritt werden die fertigen Glasfläschchen aus der Bodenmaschine entnommen. Im Leer-Schritt ist die Halteeinheit der Bodenmaschine leer und wird diese vorbereitet, um im nächsten Schritt wieder ein neues Glasfläschchen aufzunehmen.

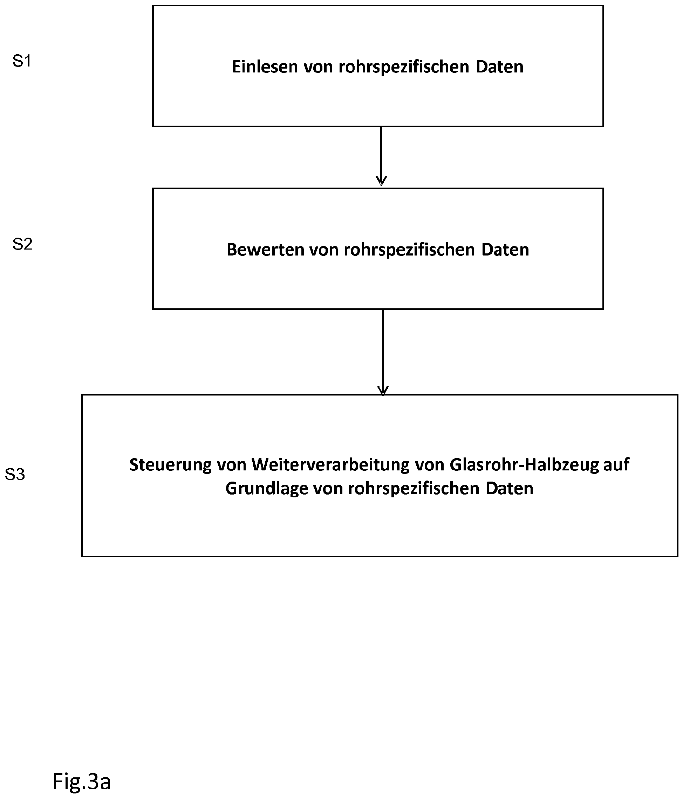

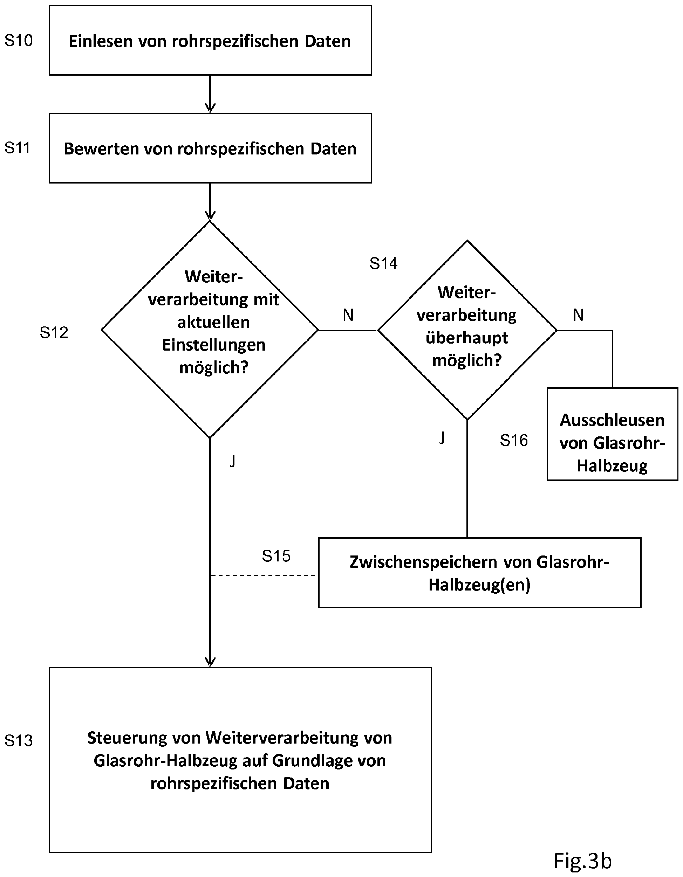

In dem zuvor beschriebenen Herstellungsverfahren sind die Böden der Glasfläschchen während der meisten Bearbeitungsschritte relativ plastisch, d.h. sie weisen eine relativ geringe Viskosität auf. Dabei werden die Prozessparameter beim Abtrennen der Glasfläschchen von einem Glasrohr-Halbzeug aber auch bei den weiteren Bearbeitungsschritten zur Bodenformung an der nachgeordneten Bodenmaschine geeignet gewählt und an die Eigenschaften des jeweils verarbeiteten Glasrohr-Halbzeugs oder des jeweils gerade verarbeiteten Unterabschnitts des jeweiligen Glasrohr-Halbzeugs angepasst, wie nachfolgend genauer anhand der Figuren 3a und 3b beschrieben, mit dem Ziel, Glasbehälter mit möglichst homogenen Eigenschaften auszubilden, die die geforderten vergleichsweise engen Toleranzen stets einhalten, aber sich auch durch weitere vorteilhafte physikalische oder physikalischchemische Eigenschaften auszeichnen, insbesondere durch eine hohe chemische Beständigkeit, eine geringe Ionenabgabe, insbesondere von Alkali-Ionen, in die in dem Glasbehälter aufzubewahrende Substanz und eine geringe Delaminationsneigung. Dabei ist die sog. Delamination herkömmlich dadurch bedingt, dass aufgrund der im Bereich des Glasbehälter-Bodens vorherrschenden sehr hohen Temperaturen Alkaliborate, Natrium und dergleichen aus dem heißen Glas ausdampfen, die sich an kühleren Bereichen der Glasbehälter unmittelbar wieder abscheiden, insbesondere in einer ringförmigen Zone unter einem gewissen Abstand zum Glasbehälterboden. Dieses unter dem Namen Delaminationsneigung bekannte Phänomen erschwert das Gewährleisten einer konstanten, optimalen Qualität der Glasbehälter. Im heißen Bereich ist insbesondere auch die stöchiometrische Zusammensetzung des Glases verändert. Durch das spätere Abkühlen des Glasbehälters entsteht hierdurch eine Phasentrennung der Oberflächenschicht, die sich weiter negativ auf die chemische Beständigkeit des Glasbehälters auswirken kann. Aufgrund der herkömmlich teilweise unkontrollierten Bedingungen während der Heissformgebungsprozesse führt dies zu weiteren Unregelmäßigkeiten bei der Herstellung der Glasbehälter.

Zur Weiterverarbeitung des jeweiligen Glasrohr-Halbzeugs werden an der Mehrzahl von Untereinheiten 21-24 der Vorrichtung 20 geeignete Prozessparameter eingestellt, beispielswiese Prozesstemperaturen und/oder Prozesszeiten und/oder Prozesstaktungen und/oder Prozessdrücke und/oder Heizleistungen von Brennern und/oder Drehgeschwindigkeiten zum Rotieren des Glasrohr-Halbzeugs während der Weiterverarbeitung oder dergleichen. Erfindungsgemäß werden diese Prozessparameter beim Weiterverarbeiten des Glasrohr-Halbzeugs einschließlich der zumindest abschnittsweise durchgeführten thermischen Umformung in Abhängigkeit von den ermittelten rohrspezifischen Daten für das jeweilige Glasrohr-Halbzeug 1 geeignet eingestellt. Die Steuerung dieser Prozessparameter in Abhängigkeit von den jeweiligen rohrspezifischen Daten erfolgt mittels der Steuerungseinrichtung 16, die zu diesem Zweck Zugriff auf die rohrspezifischen Daten hat, beispielsweise durch Zugriff auf die Datenbank 12, welche diese rohrspezifischen Daten speichert.

Wie in der Fig. 2b gezeigt, können die rohrspezifischen Daten 30, 31 in der Datenbank beispielsweise in Form einer Nachschlagetabelle in Zuordnung zu jeweiligen Rohr-Identifizierungsinformationen Rohr-ID1, Rohr-ID2 ... gespeichert sein.

Nachfolgend werden anhand der Figuren 3a und 3b zwei Ausführungsbeispiele für ein Verfahren gemäß der vorliegenden Erfindung zum Weiterverarbeiten eines Glasrohr-Halbzeugs zu einem Endprodukt beschrieben, beispielsweise zu einem Glasbehälter.

Gemäß der Fig. 3a werden die rohrspezifischen Daten für ein jeweiliges Glasrohr-Halbzeug, das weiterverarbeitet werden soll, in dem Schritt S1 zunächst eingelesen, beispielsweise durch Zugriff auf eine externe Datenbank 12 (vgl. Fig. 2a), durch Auslesen eines Datenträgers oder einer Markierung, die auf dem Glasrohr-Halbzeug vorgesehen ist. In dem Schritt S2 werden die ausgelesenen rohrspezifischen Daten dann bewertet, insbesondere daraufhin, ob die aktuell für die Weiterverarbeitungsvorrichtung eingestellten Prozessparameter für das aktuell zu verarbeitende Glasrohr-Halbzeug verändert werden müssen oder nicht. Wenn in dem Schritt S2 festgestellt wird, dass die aktuellen Prozessparameter der Weiterverarbeitungsvorrichtung auch für das neu zu verarbeitende Glasrohr-Halbzeug bzw. einen Unterabschnitt davon geeignet sind, erfolgt die Weiterverarbeitung des neu zu verarbeitenden Glasrohr-Halbzeugs bzw. des Unterabschnitts davon mit den aktuellen Prozessparametern. Andernfalls werden die Prozessparameter in Abhängigkeit von den rohrspezifischen Daten des neu zu verarbeitenden Glasrohr-Halbzeugs bzw. des Unterabschnitts davon geändert. Nach Weiterverarbeitung des neu zu verarbeitenden Glasrohr-Halbzeugs bzw. des Unterabschnitts davon kehrt das Verfahren zurück zum Schritt S1, um ein anderes Glasrohr-Halbzeug bzw. einen anderen Unterabschnitt des aktuell zu verarbeitenden Glasrohr-Halbzeugs weiter zu verarbeiten.

Abweichend zum Verfahren gemäß der Fig. 3a wird bei dem Verfahren gemäß der Fig. 3b nach dem Schritt S11 zunächst abgefragt, ob eine Weiterverarbeitung des neu zu verarbeitenden Glasrohr-Halbzeugs bzw. des nächsten Unterabschnitts davon überhaupt mit den aktuellen Einstellungen der Prozessparameter möglich ist. Wenn dies nicht der Fall ist, wird anstelle einer sofortigen Änderung der Prozessparameter zunächst in dem Schritt S14 überprüft, ob eine Weiterverarbeitung des neu zu verarbeitenden Glasrohr-Halbzeugs bzw. des nächsten Unterabschnitts des aktuell zu verarbeitenden Glasrohr-Halbzeugs überhaupt möglich ist, also wenn die Prozessparameter entsprechend den jeweiligen rohrspezifischen Daten geändert würden. Wenn dies der Fall ist, wird das neu zu verarbeitende Glasrohr-Halbzeug bzw. der nächste zu verarbeitende Unterabschnitt des aktuell zu verarbeitenden Glasrohr-Halbzeugs im Schritt S15 zwischengespeichert. Andernfalls wird das neu zu verarbeitende Glasrohr-Halbzeug bzw. der nächste zu verarbeitende Unterabschnitt des aktuell zu verarbeitenden Glasrohr-Halbzeugs im Schritt S16 aussortiert, weil ja in dem Schritt S14 festgestellt wurde, dass eine Weiterverarbeitung für das aussortierte Glasrohr-Halbzeug bzw. den nächsten zu verarbeitenden Unterabschnitt überhaupt nicht möglich ist.

Anschließend kehrt das Verfahren zunächst zurück zum Schritt S10 und fährt mit einer Weiterverarbeitung des nächsten Glasrohr-Halbzeugs bzw. des nächsten Unterabschnitts des aktuell zu verarbeitenden Glasrohr-Halbzeugs fort (Schritte S10-S13), es sei denn, dass auch das nächste Glasrohr-Halbzeug bzw. der nächste Unterabschnitt des aktuell zu verarbeitenden Glasrohr-Halbzeugs nicht weiter verarbeitet werden kann (negative Entscheidung in Schritt S14 und Aussortierung in Schritt S16) oder auch das nächste Glasrohr-Halbzeug bzw. der nächste Unterabschnitt des aktuell zu verarbeitenden Glasrohr-Halbzeugs im Schritt S15 zwischengespeichert wird.

Wenn eine genügend große Anzahl von Glasrohr-Halbzeugen bzw. Unterabschnitten in dem Schritt S15 zwischengespeichert worden sind, kann das Verfahren nach Rückkehr zum Schritt S10 zunächst die Prozessparameter für die in dem Schritt S15 zwischengespeicherten Glasrohr-Halbzeuge bzw. Unterabschnitte geeignet einstellen und dann diese Glasrohr-Halbzeuge bzw. Unterabschnitte mit Prozessparametern, die den rohrspezifischen Daten für diese Glasrohr-Halbzeuge bzw. Unterabschnitte entsprechen, im Schritt S13 weiter verarbeiten. Dadurch ergibt sich eine Zeitersparnis, weil die Prozessparameter zur Weiterverarbeitung nicht permanent geändert werden müssen, sondern nur gruppenweise, also für die nächste Gruppe von Glasrohr-Halbzeugen bzw. Unterabschnitte, die in dem Schritt S14 zwischengespeichert wurden.

Der Schritt S14 eignet sich insbesondere auch zur Vorselektion von Glasrohr-Halbzeugen bzw. Unterabschnitten in eine oder mehrere Klassen von Glasrohr-Halbzeugen bzw. Unterabschnitten, für die die gleichen Prozessparameter zur Weiterverarbeitung angewendet werden müssen, sodass die Weiterverarbeitung auch gruppenweise bzw. sequentiell für solche Klassen von Glasrohr-Halbzeugen bzw. Unterabschnitten ausgeführt werden kann, wobei die Prozessparameter zur Weiterverarbeitung dann nur jeweils für die jeweils neue Klasse von Glasrohr-Halbzeugen bzw. Unterabschnitten neu eingestellt zu werden brauchen.

Als Voraussetzung zur Durchführung des erfindungsgemäßen Verfahrens müssen während der Rohrherstellung für die Weiterverarbeitung relevante Eigenschaften der Glasrohr-Halbzeuge erfasst bzw. bereitgestellt werden. Dies betrifft insbesondere geometrische Abmessungen des Glasrohr-Halbzeugs, insbesondere zumindest eine der folgenden Messgrößen für das jeweilige Glasrohr-Halbzeug: Innendurchmesser; Außendurchmesser; Wanddicke; Krümmungsradius; Ovalität des Innendurchmessers; Ovalität des Außendurchmessers; eine Variation von zumindest einer der folgenden Messgrößen: Innendurchmesser; Außendurchmesser; Wanddicke; Krümmungsradius; Ovalität des Innendurchmessers; Ovalität des Außendurchmessers. Ferner können auch weitere Information zur Qualität des jeweiligen Glasrohr-Halbzeugs bei der Rohrherstellung ermittelt werden, insbesondere zumindest eine der folgenden Informationen für das Glasrohr-Halbzeug: Zusammensetzung einer Glasschmelze, die zur Rohrformgebung des Glasrohr-Halbzeugs verwendet wurde; Homogenität der Glasschmelze, die zur Rohrformgebung des Glasrohr-Halbzeugs verwendet wurde; Prozessparameter zur Herstellung und zum Prozessieren der Glasschmelze, die zur Rohrformgebung des Glasrohr-Halbzeugs verwendet wurde; Einschlüsse in einer Wand des Glasrohr-Halbzeugs, einschließlich von Blasen, Knoten, kristallinen Bereichen und dergleichen.

Diese rohrspezifischen Daten werden nach einer Gut-/Schlecht-Selektion der Glasrohre nicht mehr rohrspezifisch archiviert, ohne dass ein weiterverarbeitender Betrieb später auf diese Daten wieder zugreifen kann und dieser dann die entsprechenden Messungen wiederholen muss. Vielmehr werden die bei der Rohrherstellung anfallenden Daten erfindungsgemäß mit relevanten Informationen über die Eigenschaften eines jeweiligen Glasrohrs für einen weiterverarbeitenden Betrieb verfügbar gemacht, so dass eine individuelle Weiterverarbeitung der Glasrohre auf der Grundlage dieser rohrspezifischen Daten erfolgen kann und eine nochmalige Messung der relevanten Eigenschaften des Glasrohr-Halbzeugs erfindungsgemäß überflüssig wird. Zu diesem Zweck erhält jedes Rohr im Herstellungsprozess eine Codierung, die entweder direkt oder indirekt als Datenreferenz Messdaten enthält, die einem weiterverarbeitenden Betrieb ausgelesen und für die Weiterverarbeitung der Glasrohre verwendet werden können.

Ein erstes Anwendungsbeispiel betrifft die Verwendung von Außendurchmesser-Messwerten zur Selektion von Glasrohren für die Herstellung von Endprodukten (beispielsweise Hohlglasprodukten) mit engen Außendurchmesser-Toleranzen und/oder Innendurchmesser-Toleranzen, beispielsweise eines Glasrohrs mit einem Soll-Außendurchmesser von 10,85 mm und einer Toleranz ± 0,1 mm. Aufgrund der online-Messwerte, die während der Glasrohrproduktion ermittelt wurden, werden die Glasrohre z.B. mit den Informationen maximaler und minimaler Außendurchmesser gekennzeichnet. Die Glasrohre werden erfindungsgemäß während der Fertigung in der Art codiert, dass die Geometriedaten, die während der Glasrohrproduktion gemessen wurden, dem Glasrohr zugeordnet werden. Die Zuordnung kann entweder direkt erfolgen, indem die relevanten Messwerte in eine Markierung des Glasrohres geschrieben werden, oder indirekt, indem jedes Glasrohr mit einer eindeutigen Seriennummer codiert wird und die relevanten Daten für das Glasrohr bei einem weiterverarbeitenden Betrieb aus einer Liste/Datenbank abgerufen werden. Die indirekte Methode erlaubt, wesentlich mehr Daten zur Verfügung zu stellen.

Für das Anwendungsbeispiel können die Außendurchmesser-Verläufe von Glasrohren beispielsweise in einem oberen, mittleren und unteren Toleranzbereich dargestellt werden. Durch das Auslesen der Messdaten können die Glasrohre dann in mehreren Klassen selektiert werden und später individuell weiterbehandelt werden, entsprechend der jeweiligen Klasse. Einfachste Anwendung ist beispielsweise die Vorsortierung der Glasrohre in Außendurchmesser-Klassen und die Weiterverarbeitung gruppenweise entsprechend diesen Außendurchmesser-Klassen, und zwar jeweils mit Prozessparametern, die der jeweiligen Außendurchmesser-Klasse entsprechen. Vorteil ist die wesentlich stabilere Bearbeitung des Glasrohrs mit standardisierten Einstellungen der Weiterverarbeitungseinrichtung und minimalen Benutzereingriffen. Auf diese Weise lassen sich eng tolerierte Endprodukte herstellen, ohne für das Ausgangs-Glasrohr Toleranzen zu fordern, die beim Hersteller extreme Aufwendungen und hohen Ausfall bedeuten würden. Gegenüber dem aktuellen Stand der Technik entfällt insbesondere der Aufwand, die Rohre in der gesamten Länge zu vermessen. Die Daten können beispielsweise direkt mit Hilfe eines einfachen Lesegerätes für den Code auf dem Rohr ausgelesen werden.

Weitere Anwendungsmöglichkeit ist die Nutzung der Rohrdaten für die Steuerung von Rohrbearbeitungsmaschinen. Es ist Stand der Technik, dass z.B. in der Ampullenfertigung Messungen an gefertigten Ampullen benutzt werden, um die Maschine für die Bearbeitung der nächsten Ampullen aus diesem Rohr nachzuregeln. Durch den Zugriff auf die während der Glasrohr-Produktion ermittelten rohrspezifischen Daten erübrigt sich erfindungsgemäß eine erneute Messung, da die Außendurchmesser-Messwerte des Glasrohrs bereits zum Beginn der Weiterverarbeitung des Glasrohrs vorliegen und die Anlage einsprechend dem aktuellen Außendurchmessser des Rohrs gesteuert werden kann.

Ebenso könnten einzelne Rohre mit unerwünschten Eigenschaften ausselektiert werden, wie z.B. Rohre mit einem hohen Außendurchmesser-Gradienten.

Vorteile für den Rohrhersteller sind die Reduktion des Produktspektrums, da wenige Toleranzen ausreichen, um unterschiedlichste Anforderungen in der Weiterverarbeitung zu bedienen.

Anwendungsbeispiel Wareneingangskontrolle (beim weiterverarbeitenden Betrieb):
Statt einer Überprüfung von Stichproben von gelieferten Glasrohren bei der Wareneingangskontrolle bei einem weiterverarbeitenden Betrieb auf Einhaltung von Toleranzen, statistischen Kenngrößen etc. kann erfindungsgemäß an den ebenfalls bereitgestellten rohrspezifischen Daten, also anhand von konkreten Messdaten von Glasrohren, beim weiterverarbeitenden Betrieb ein Abgleich der Messdaten von Hersteller und weiterverarbeitendem Betrieb (= Anwender) erfolgen. Dieser Abgleich braucht nur für wenige gelieferte Glasrohre erfolgen, da dann die Abweichungen für alle anderen Glasrohre entsprechend berechnet werden können. Der Aufwand für die Wareneingangskontrolle beim weiterverarbeitenden Betrieb wird auf diese Weise dramatisch reduziert und die Genauigkeit der Vergleichsmessungen wird deutlich erhöht. Aufgrund des Fertigungsverfahrens weisen Glasrohre örtliche Schwankungen der Geometrie auf. Diese Schwankungen machen herkömmlich direkte Vergleichsmessungen mit hoher Genauigkeit unmöglich, da bereits geringe Abweichungen der Messpositionen (einige mm) Messfehler von mehreren µm bewirken können. Zur Vermeidung dieses Effektes können im Code des Glasrohres Messposition und Messwert hinterlegt werden, um exakte Vergleichsmessungen zu ermöglichen. Dieses Verfahren ermöglicht damit den Übergang von Stichprobenprüfungen zu Einzelstückprüfungen als Basis für eine praktisch fehlerfreie ("Zero Defekt") Produktion.

Die aufgeführten Anwendungen zur Verwendung von Daten zum Außendurchmesser können in ähnlicher Weise für Wanddicken- und Innendurchmesserdaten oder auch davon abgeleitete Geometriedaten, wie beispielsweise Ovalität von Außen- oder Innendurchmesser, Wanddickenunterschied und dergleichen, adaptiert werden. Selbiges gilt für die Krümmung eines Glasrohrs. Zusätzlich können in ähnlicher Weise Daten zur Glasqualität des Glasrohrs selbst (z.B. Blasen, Knoten, Kristalle, ...) im Code hinterlegt werden und für eine individuelle Weiterverarbeitung der Glasrohre entsprechend der Glasqualität verwendet werden.

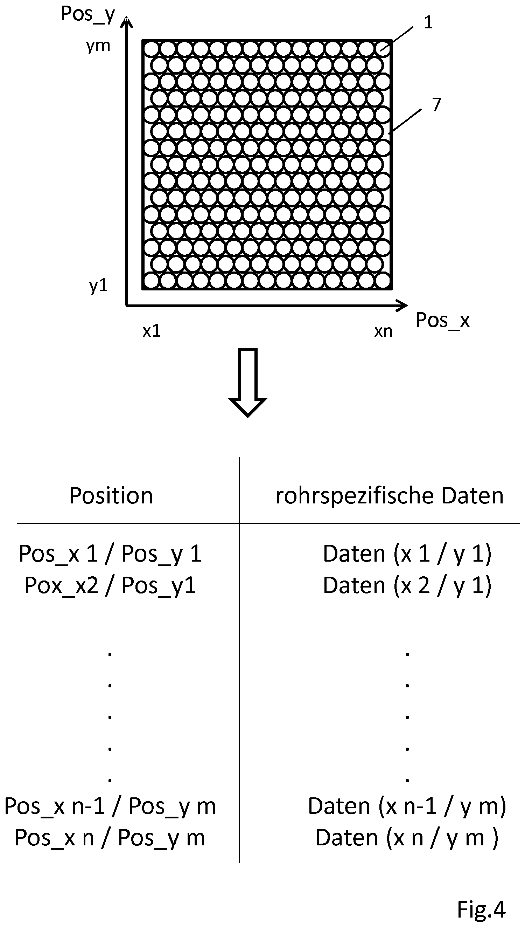

Während vorstehend stets beschrieben wurde, dass die rohrspezifischen Daten aus einer Markierung ausgelesen werden, die mit dem jeweiligen Glasrohr-Halbzeug verbunden ist oder die unmittelbar auf dem jeweiligen Glasrohr-Halbzeug aufgebracht (beispielsweise aufgedruckt oder aufgeklebt) oder in dieses unmittelbar eingebracht (beispielsweise eingeschrieben) ist, wird nachfolgend anhand der Fig. 4 ein Vergleichsbeispiel eines Verfahrens zum Weiterverarbeiten eines Glasrohr-Halbzeugs zur Herstellung eines Endprodukts beschrieben, bei dem die rohrspezifische Information anhand einer Position in einem Glasrohr-Stapel ermittelt wird, die mittels einer eineindeutigen Abbildungsvorschrift den jeweiligen rohrspezifischen Daten zugeordnet ist. Der Ausführungsform gemäß der Fig. 4 liegt dabei die Annahme zugrunde, dass Glasrohr-Halbzeuge zumeist in Form von Verpackungseinheiten mit einem rechteckförmigen Querschnitt an weiterverarbeitende Betriebe ausgeliefert werden, die jeweils aus einer Mehrzahl von Glasrohr-Halbzeugen bestehen. Genauer gesagt besteht der im oberen Bildteil der Fig. 4 gezeigte Stapel aus einer Mehrzahl von Glasrohr-Halbzeugen, deren Anzahl in einer ersten Richtung (x-Richtung) xn beträgt und deren Anzahl in einer zweiten Richtung (y-Richtung), die senkrecht zu der ersten Richtung ist, ym beträgt, wobei die Lagen von Glasrohr-Halbzeugen jeweils um einen halben Glasrohr-Durchmesser versetzt zueinander aufeinander gestapelt sind. Derartige Verpackungseinheiten bestehen beispielsweise aus einhundert Glasrohr-Halbzeugen mit jeweils der gleichen Länge. Die Orientierung dieser Verpackungseinheiten ist aufgrund einer Markierung für deren Oberseite eindeutig vorgegeben. Aufgrund dieser eindeutig vorgegebenen Orientierung kann jedem Glasrohr-Halbzeug in dem Verpackungsgebilde eine eineindeutige Position zugeordnet werden. Beispielsweise sind die Glasrohr-Halbzeuge in der untersten Lage in der Fig. 4 von links nach rechts durch koordinatenähnliche Positionen Pos_x1 / Pos_y1 bis Pos_xn / Pos_y1 charakterisiert, denen entsprechende rohrspezifische Datensätze Daten (x1/y1) bis Daten (xn/y1) zugeordnet sind. Und die Glasrohr-Halbzeuge in der obersten Lage in der Fig. 4 sind von links nach rechts durch koordinatenähnliche Positionen Pos_x1 / Pos_ym bis Pos_xn / Pos_ym charakterisiert, denen entsprechende rohrspezifische Datensätze Daten (x1/ym) bis Daten (xn/ym) zugeordnet sind. In Kenntnis der Position eines jeweiligen Glasrohr-Halbzeugs in der Verpackungseinheit können die rohrspezifischen Daten somit durch Zugriff auf eine Datenbank, einen Datenträger oder auch auf ein zugehöriges Datenblatt in eindeutiger Zuordnung eingelesen werden, um zumindest einen Prozessparameter beim Weiterverarbeiten des jeweiligen Glasrohr-Halbzeugs in Abhängigkeit von den so ermittelten rohrspezifischen Daten für das jeweilige Glasrohr-Halbzeug zu steuern. Selbstverständlich kann die vorstehend beschriebene Zuordnung der Positionen der Glasrohr-Halbzeuge in der Verpackungseinheit auch in beliebiger anderer Weise entsprechend einer Abbildungsvorschrift vorgegeben sein, was grundsätzlich auch eine random-Zuordnung der Positionen der Glasrohr-Halbzeuge einschließen kann, solange die Abbildungsvorschrift den beteiligten Parteien zur Verfügung gestellt wird.

Das Verfahren gemäß der vorliegenden Erfindung eignet sich allgemein für die Weiterverarbeitung von Glasrohren zur Fertigung beliebiger eng tolerierter Endprodukte. Ein bevorzugtes Beispiel für solche Endprodukte sind Behälter für Substanzen für pharmazeutische, medizinische oder auch kosmetische Anwendungen, beispielsweise Vials, Karpulen oder Spritzenkörper.

Grundsätzlich eignet sich das erfindungsgemäße Verfahren jedoch auch für beliebige andere Verfahren zur Weiterverarbeitung von Glasrohren einschließlich einer zumindest abschnittsweise durchgeführten thermischen Umformung, beispielsweise eines Aufweitens oder Reduzierens eines Außen- und/oder Innendurchmessers eines Glasrohrs, eines Streckens eines Glasrohrs, eines Veränderns des Außen- und/oder Innenprofils eines Glasrohrs, jeweils einschließlich einer zumindest abschnittsweise durchgeführten thermischen Umformung, insbesondere bei Temperaturen oberhalb einer Transformationstemperatur des Glases.

### BEZUGSZEICHENLISTE

- 1: Glasrohr oder Glasrohr-Halbzeug
- 2: Rohrstrangmarkierung
- 3: Rohrmarkierung
- 4: Rohr-Identifizierungsinformation
- 5: zusätzliche Rohrdaten

- 7: Verpackungseinheit

- 10: Messeinrichtung / Mess- und Markierungseinrichtung
- 11: Steuerungseinrichtung (bei Glasrohr-Hersteller)
- 12: Datenbank

- 15: Ausleseeinrichtung
- 16: Steuerungseinrichtung (bei weiterverarbeitendem Betrieb)
- 17: Netzwerk

- 20: Weiterverarbeitungsvorrichtung
- 21: Untereinheit 1 von Weiterverarbeitungsvorrichtung 20
- 22: Untereinheit 2 von Weiterverarbeitungsvorrichtung 20
- 23: Untereinheit 3 von Weiterverarbeitungsvorrichtung 20
- 24: Untereinheit 4 von Weiterverarbeitungsvorrichtung 20

- 30: rohrspezifische Daten zu Rohr-ID1
- 31: rohrspezifische Daten zu Rohr-ID2

- 1: vorbestimmter Abstand
- Z: Längsrichtung

## Patentansprüche

1. Verfahren zum Weiterverarbeiten einer Mehrzahl von Glasrohr-Halbzeugen (1) einschließlich einer zumindest abschnittsweise durchgeführten thermischen Umformung unter Steuerung durch eine elektronische Steuereinrichtung (16), mit den Schritten:
Bereitstellen der Mehrzahl von Glasrohr-Halbzeugen (1), wobei für jedes Glasrohr-Halbzeug der Mehrzahl von Glasrohr-Halbzeugen rohrspezifische Daten bereitgestellt werden;
Auslesen der rohrspezifischen Daten (2-5; 30-31) für ein jeweiliges Glasrohr-Halbzeug (1) unter Steuerung durch die elektronische Steuereinrichtung (16); und
Weiterverarbeiten der Mehrzahl von Glasrohr-Halbzeugen (1) einschließlich einer zumindest abschnittsweise durchgeführten thermischen Umformung; wobei
zumindest ein Prozessparameter beim Weiterverarbeiten eines jeweiligen Glasrohr-Halbzeugs (1) der Mehrzahl von Glasrohr-Halbzeugen einschließlich der zumindest abschnittsweise durchgeführten thermischen Umformung mittels der elektronischen Steuereinrichtung (16) in Abhängigkeit von den rohrspezifischen Daten (2-5; 30-31) für das jeweilige Glasrohr-Halbzeug (1) gesteuert wird, und
das jeweilige Glasrohr-Halbzeug (1) mit zumindest einer Markierung (3; 4) gekennzeichnet ist, anhand der die rohrspezifischen Daten für das jeweilige Glasrohr-Halbzeug ausgelesen werden, wobei
der zumindest eine Prozessparameter Prozessbedingungen beim Abtrennen von Unterabschnitten von einem Glasrohr-Halbzeug oder die Prozessbedingungen bei der Weiterverarbeitung eines von dem jeweiligen Glasrohr-Halbzeug abgetrennten Unterabschnitts oder Prozessbedingungen bei der thermischen Umformung des abgetrennten Unterabschnitts betrifft.

2. Verfahren nach Anspruch 1, wobei die rohrspezifischen Daten jeweils für Unterabschnitte des Glasrohr-Halbzeugs (1) einer vorbestimmten Länge (1) in einer Längsrichtung (z) des Glasrohr-Halbzeugs (1) bereitgestellt werden.

3. Verfahren nach Anspruch 1, wobei die rohrspezifischen Daten für ein jeweiliges Glasrohr-Halbzeug gemittelt über eine Mehrzahl von Unterabschnitten des Glasrohr-Halbzeugs (1) in einer Längsrichtung (z) des Glasrohr-Halbzeugs (1) bereitgestellt werden.

4. Verfahren nach Anspruch 3, wobei das Glasrohr-Halbzeug (1) weiterhin entsprechend den gemittelten rohrspezifischen Daten in eine von mehreren Klassen klassifiziert bereitgestellt wird.

5. Verfahren nach einem der vorhergehenden Ansprüche, wobei die rohrspezifischen Daten geometrische Abmessungen des Glasrohr-Halbzeugs betreffen und insbesondere zumindest eine der folgenden Messgrößen für das Glasrohr-Halbzeug beinhalten:
Innendurchmesser; Außendurchmesser; Wanddicke; Krümmungsradius; Ovalität des Innendurchmessers; Ovalität des Außendurchmessers; eine Variation von zumindest einer der folgenden Messgrößen: Innendurchmesser, Außendurchmesser, Wanddicke, Krümmungsradius, Ovalität des Innendurchmessers und Ovalität des Außendurchrnessers.

6. Verfahren nach einem der vorhergehenden Ansprüche, wobei die rohrspezifischen Daten Information zur Qualität des Glasrohr-Halbzeugs enthalten und insbesondere zumindest eine der folgenden Informationen für das Glasrohr-Halbzeug beinhalten:
Zusammensetzung der Glasschmelze, die zur Rohrformgebung des Glasrohr-Halbzeugs verwendet wurde; Homogenität der Glasschmelze, die zur Rohrformgebung des Glasrohr-Halbzeugs verwendet wurde; Prozessparameter zur Herstellung und Prozessierung der Glasschmelze, die zur Rohrformgebung des Glasrohr-Halbzeugs verwendet wurde; Einschlüsse in einer Wand des Glasrohr-Halbzeugs, einschließlich von Blasen, Knoten, kristallinen Bereichen und dergleichen.

7. Verfahren nach einem der vorhergehenden Ansprüche, wobei die zumindest eine Markierung eine Rohr-Identifizierungsinformation (4) enthält, anhand der die rohrspezifischen Daten für das jeweilige Glasrohr-Halbzeug aus einem Datenspeicher oder einer Datenbank (12) ausgelesen werden,

8. Verfahren nach einem der vorhergehenden Ansprüche, wobei die rohrspezifischen Daten für das Glasrohr-Halbzeug in weiteren Markierungen (2) auf dem Glasrohr-Halbzeug oder in zumindest einem weiteren Markierungsabschnitt (5) der zumindest einen Markierung (3; 4) auf dem Glasrohr-Halbzeug enthalten sind.

9. Verfahren nach einem der vorhergehenden Ansprüche, wobei die zumindest eine Markierung (3; 4) mittels eines der folgenden Verfahren aufgebracht worden ist:
Aufbringen, insbesondere Aufdrucken, einer Strichmarkierung oder Matrixcode-Markierung, welche die rohrspezifischen Daten oder einen Datenlink auf diese codiert; Aufkleben eines Aufklebers, welcher die rohrspezifischen Daten oder einen Datenlink auf diese codiert; Anbringen eines RFID-Tags an dem Glasrohr-Halbzeug, welcher die rohrspezifischen Daten oder einen Datenlink auf diese codiert.

10. Verfahren nach einem der vorhergehenden Ansprüche, wobei die zumindest eine Markierung (3; 4) durch Wechselwirken eines Laserstrahls mit dem Glas des Glasrohr-Halbzeugs erzeugt wird, wobei die zumindest eine Markierung (3; 4) bevorzugt durch Wechselwirken eines Laserstrahls mit dem Glas des Glasrohr-Halbzeugs bei Temperaturen oberhalb der Transformationstemperatur des Glases in eine Wand des Glasrohr-Halbzeugs erzeugt wird, insbesondere als digitaler Matrix-Code (DMC).

11. Verfahren nach Anspruch 9 oder 10, wobei die zumindest eine Markierung (3; 4) optisch und berührungsfrei ausgelesen wird, um die rohrspezifischen Daten (2-5; 30-31) für das Glasrohr-Halbzeug (1) auszulesen.

12. Verfahren nach einem der vorhergehenden Ansprüche, bei dem
zumindest ein Glasrohr-Halbzeug vor dem Weiterverarbeiten gemessen und bewertet wird, und
gemessene Größen und Bewertungsdaten mit den rohrspezifischen Daten für das zumindest eine Glasrohr-Halbzeug verglichen werden, um eine Abweichungsinformation zu ermitteln, wobei
der zumindest eine Prozessparameter, der beim Weiterverarbeiten einer Mehrzahl von Glasrohr-Halbzeugen einschließlich der zumindest abschnittsweise durchgeführten thermischen Umformung verwendet wird, in Abhängigkeit von den rohrspezifischen Daten (2-5; 30-31) für die jeweiligen Glasrohr-Halbzeuge unter Berücksichtigung der ermittelten Abweichungsinformation gesteuert wird.

13. Verfahren nach einem der vorhergehenden Ansprüche, wobei das Weiterverarbeiten des Glasrohr-Halbzeugs (1) ein lokales Erwärmen eines Abschnittes des Glasrohr-Halbzeugs, und Abtrennen eines Behälters durch Abtrennen von dem Glasrohr-Halbzeug im Bereich des lokal erwärmten Abschnittes unter Ausbildung eines Bodens des Behälters umfasst, wobei
das Abtrennen des Behälters von dem Glasrohr-Halbzeug bevorzugt weiterhin umfasst:
Vorformen eines Halses des Behälters, kopfüber Aufnehmen der Behälter von einer Haltevorrichtung und allmähliches Ausbilden des Bodens des Behälters von dem Glasrohr-Halbzeug durch Zusammensacken einer Wand des Glasrohrs.

14. Verfahren nach Anspruch 13, weiterhin umfassend eine weitere Bearbeitung des Bodens des Behälters, mit zumindest einem der folgenden Schritte:
Bearbeiten des Bodens des Behälters mit mindestens einem Brenner, um den Boden grob zu formen;
weitere Bearbeitung des Bodens mit mindestens einem Brenner, um den Boden flach zu formen;
Pressen des Bodens in eine Formmatrix unter Aufwenden eines Gasdrucks, insbesondere im Bereich 0,5 bis 3,0 bar, um den Boden final zu formen;
Abkühlen des Bodens.

15. Verfahren nach Anspruch 13 oder 14, wobei das Weiterverarbeiten des Glasrohr-Halbzeugs (1) weiterhin ein Aussortieren oder vorübergehendes Zwischenspeichern eines Glasrohr-Halbzeugs umfasst, wenn auf Grundlage der rohrspezifischen Daten für das Glasrohr-Halbzeug ermittelt wird, dass das Weiterverarbeiten des Glasrohr-Halbzeugs mit aktuellen Prozessparametern nicht möglich ist, wobei
das Glasrohr-Halbzeug nach dem vorübergehenden Zwischenspeichern bevorzugt weiterverarbeitet wird, wobei das Glasrohr-Halbzeug nach dem vorübergehenden Zwischenspeichern bevorzugt mit geänderten Prozessparametern, die auf Grundlage der rohrspezifischen Daten für das Glasrohr-Halbzeug ermittelt werden, weiterverarbeitet wird.

16. Verfahren nach einem der Ansprüche 13 bis 15, wobei der Behälter ein Behälter zur Aufnahme von pharmazeutischen, medizinischen oder kosmetischen Substanzen ist, insbesondere ein Vial, eine Karpule oder ein Spritzenkörper.

## Claims

1. A method for further processing of a plurality of semi-finished glass tube products (1) including an at least in sections performed thermal reshaping under the control of an electronic control device (16), with the steps:
providing of the plurality of semi-finished glass tube products (1), wherein for each semi-finished glass tube product of the plurality of semi-finished glass tube products tube-specific data are provided;
reading out of the tube-specific data (2-5; 30-31) for a respective semi-finished glass tube product (1) under the control of the electronic control device (16); and
further processing of the plurality of semi-finished glass tube products (1) including an at least in sections performed thermal reshaping; wherein
at least one process parameter during the further processing of a respective semi-finished glass tube product (1) of the plurality of semi-finished glass tube products including the at least in sections performed thermal reshaping is controlled by means of the electronic control device (16) dependent on the tube-specific data (2-5; 30-31) for the respective semi-finished glass tube product (1), and
the respective semi-finished glass tube product (1) is labeled with at least one marking (3; 4), with the aid of which the tube-specific data for the respective semi-finished glass tube product are read out, wherein
the at least one process parameter relates to process conditions during separating of subsections from a semi-finished glass tube product or the process conditions during the further processing of a subsection separated from the respective semi-finished glass tube product or process conditions during the thermal reshaping of the separated subsection.

2. The method according to claim 1, wherein the tube-specific data are provided each for subsections of the semi-finished glass tube product (1) having a predetermined length (1) in a longitudinal direction (z) of the semi-finished glass tube product (1).

3. The method according to claim 1, wherein the tube-specific data for a respective semi-finished glass tube product are provided averaged over a plurality of subsections of the semi-finished glass tube product (1) in a longitudinal direction (z) of the semi-finished glass tube product (1).

4. The method according to claim 3, wherein the semi-finished glass tube product (1) furthermore pursuant to the averaged tube-specific data is provided classified in one of several classes.

5. The method according to one of the preceding claims, wherein the tube-specific data relate to geometric dimensions of the semi-finished glass tube product and in particular contain one of the following measured variables for the semi-finished glass tube product:
inner diameter; outer diameter; wall thickness; curvature radius; ovality of the inner diameter; ovality of the outer diameter; a variation of at least one of the following measured variables: inner diameter, outer diameter, wall thickness, curvature radius, ovality of the inner diameter and ovality of the outer diameter.

6. The method according to one of the preceding claims, wherein the tube-specific data contain information about the quality of the semi-finished glass tube product and in particular contain at least one of the following information about the semi-finished glass tube product:
composition of the glass melt which has been used for the tube shaping of the semi-finished glass tube product; homogeneity of the glass melt which has been used for the tube shaping of the semi-finished glass tube product; process parameters for the production and processing of the glass melt which has been used for the tube shaping of the semi-finished glass tube product; inclusions in a wall of the semi-finished glass tube product, including bubbles, nodes, crystalline regions and the like.

7. The method according to one of the preceding claims, wherein the at least one marking contains a tube identification information (4), with the aid of which the tube-specific data for the respective semi-finished glass tube product are read out of a data memory or a data bank (12).

8. The method according to one of the preceding claims, wherein the tube-specific data for the semi-finished glass tube product are contained in further markings (2) on the semi-finished glass tube product or in at least one further marking section (5) of the at least one marking (3; 4) on the semi-finished glass tube product.

9. The method according to one of the preceding claims, wherein the at least one marking (3; 4) has been applied by means of one of the following methods:
applying, in particular imprinting, of a line marking or matrix code marking which encodes the tube-specific data or a data link for them; gluing on of an adhesive sticker which encodes the tube-specific data or a data link for them; attaching of an RFID tag at the semi-finished glass tube product which encodes the tube-specific data or a data link for them.

10. The method according to one of the preceding claims, wherein the at least one marking (3; 4) is generated by interacting of a laser beam with the glass of the semi-finished glass tube product, wherein the at least one marking (3; 4) is preferably generated by interacting of a laser beam with the glass of the semi-finished glass tube product at temperatures above the transformation temperature of the glass in a wall of the semi-finished glass tube product, in particular as digital matrix code (DMC).

11. The method according to claim 9 or 10, wherein the at least one marking (3; 4) is read out in an optical and contactless manner for reading out the tube-specific data (2-5; 30-31) for the semi-finished glass tube product (1).

12. The method according to one of the preceding claims, wherein
at least one semi-finished glass tube product prior to further processing is measured and evaluated, and
measured variables and evaluation data are compared with the tube-specific data for the at least one semi-finished glass tube product for finding out a deviation information, wherein
the at least one process parameter which is used during further processing of a plurality of semi-finished glass tube products including the at least in sections performed thermal reshaping dependent on the tube-specific data (2-5; 30-31) for the respective semi-finished glass tube product is controlled under consideration of the deviation information found out.

13. The method according to one of the preceding claims, wherein the further processing of the semi-finished glass tube product (1) comprises local heating of a section of the semi-finished glass tube product and separating of a container by separating from the semi-finished glass tube product in the region of the locally heated section under the formation of a bottom of the container, wherein
the separating of the container from the semi-finished glass tube product preferably furthermore comprises:
preforming of a neck of the container, receiving of the containers upside down by a holder and gradually forming of the bottom of the container out of the semi-finished glass tube product by slumping down of a wall of the glass tube.

14. The method according to claim 13, furthermore comprising a further treatment of the bottom of the container, with at least one of the following steps:
treating of the bottom of the container with at least one burner for roughly forming the bottom;
further treatment of the bottom with at least one burner for forming the bottom into a flat shape;
pressing of the bottom into a molding matrix using a gas pressure, in particular in the range of 0.5 to 3.0 bar, for finally forming the bottom;
cooling of the bottom.

15. The method according to claim 13 or 14, wherein the further processing of the semi-finished glass tube product (1) furthermore comprises a sorting out or temporary storage of a semi-finished glass tube product, when on the basis of the tube-specific data for the semi-finished glass tube product is found out that the further processing of the semi-finished glass tube product with the actual process parameters is not possible, wherein the semi-finished glass tube product after the temporary storage is preferably further processed, wherein after the temporary storage the semi-finished glass tube product is preferably further processed with changed process parameters which are found out on the basis of the tube-specific data for the semi-finished glass tube product.

16. The method according to one of claims 13 to 15, wherein the container is a container for receiving pharmaceutical, medical or cosmetic substances, in particular a vial, a carpule or a syringe body.

## Revendications

1. Procédé de traitement ultérieur d'une pluralité de tubes de verre semi-finis (1) incluant une déformation thermique réalisée au moins par en endroits sous la commande effectuée par un dispositif de commande électronique (16), le procédé comprenant les étapes suivantes :
fournir de la pluralité de tubes de verre semi-finis (1), des données étant fournies qui sont spécifiques à chaque tube de verre semi-fini de la pluralité de tubes de verre semi-finis ;
lire les données (2-5 ; 30-31) spécifiques à un tube de verre semi-fini respectif (1) sous la commande effectuée par le dispositif de commande électronique (16) ; et
effectuer le traitement ultérieur de la pluralité de tubes de verre semi-finis (1) incluant une déformation thermique effectuée au moins par endroits ;
au moins un paramètre de processus étant commandé, lors du traitement ultérieur d'un tube de verre semi-fini respectif (1) de la pluralité de tubes de verre semi-finis incluant la déformation thermique effectuée au moins par endroits, à l'aide du dispositif de commande électronique (16) en fonction des données (2-5 ; 30-31) spécifiques au tube de verre semi-fini respectif (1), et
le tube de verre semi-fini respectif (1) étant **caractérisé par** au moins un marquage (3 ; 4) sur la base duquel des données spécifiques au tube de verre semi-fini sont lues,
l'au moins un paramètre de processus concernant des conditions de processus lors du découpage de sous-portions d'un tube de verre semi-fini ou les conditions de processus lors du traitement ultérieur d'une sous-portion qui a été découpée du tube de verre semi-fini respectif ou de conditions de processus lors de la déformation thermique de la sous-portion découpée.

2. Procédé selon la revendication 1, les données spécifiques à des sous-portions du tube de verre semi-fini (1) d'une longueur prédéterminée (1) dans une direction longitudinale (z) du tube de verre semi-fini (1) étant fournies.

3. Procédé selon la revendication 1, les données spécifiques à un tube de verre semi-fini respectif étant fournies en étant moyennées sur une pluralité de sous-portions du tube de verre semi-fini (1) dans une direction longitudinale (z) du tube de verre semi-fini (1).

4. Procédé selon la revendication 3, le tube de verre semi-fini (1) étant fourni en étant en outre classé dans l'une parmi une pluralité de classes conformément aux données moyennées spécifiques au tube.

5. Procédé selon l'une des revendications précédentes, les données spécifiques au tube concernant des dimensions géométriques du tube de verre semi-fini et contenant en particulier au moins une des grandeurs de mesure suivantes pour le tube de verre semi-fini :
diamètre intérieur ; diamètre extérieur ; épaisseur de paroi ; rayon de courbure ; ovalité du diamètre intérieur ; ovalité du diamètre extérieur ; une variation d'au moins une des grandeurs de mesure suivantes : diamètre intérieur, diamètre extérieur, épaisseur de paroi, rayon de courbure, ovalité du diamètre intérieur et ovalité du diamètre extérieur.

6. Procédé selon l'une des revendications précédentes, les données spécifiques au tube contenant une information sur la qualité du tube de verre semi-fini et notamment au moins une des informations suivantes sur le tube de verre semi-fini :
composition du verre fondu qui a été utilisé pour le formage du tube de verre semi-fini ; l'homogénéité du verre fondu qui a été utilisé pour le formage du tube de verre semi-fini ; des paramètres de processus concernant la production et le traitement du verre fondu qui a été utilisé pour le formage du tube de verre semi-fini ; inclusions dans une paroi du tube de verre semi-fini, incluant des bulles, des nœuds, des zones cristallines et similaires.

7. Procédé selon l'une des revendications précédentes, l'au moins un marquage contient une information d'identification de tube (4) sur la base de laquelle les données spécifiques au tube de verre semi-fini respectif sont lues dans une mémoire de données ou une base de données (12).

8. Procédé selon l'une des revendications précédentes, les données spécifiques au tube de verre semi-fini étant contenues dans d'autres marquages (2) situés sur le tube de verre semi-fini ou dans au moins une autre portion de marquage (5) de l'au moins un marquage (3 ; 4) situé sur le tube de verre semi-fini.

9. Procédé selon l'une des revendications précédentes, l'au moins un marquage (3 ; 4) ayant été appliqué au moyen de l'un des procédé suivants :
application, en particulier impression, d'un marquage à barres ou d'un marquage à code matriciel qui code les données spécifiques au tube ou un lien de données avec celles-ci ; collage d'un autocollant qui code les données spécifiques au tube ou un lien de données avec celles-ci ; fixation d'une étiquette RFID au tube de verre semi-fini, laquelle code les données spécifiques au tube ou un lien de données avec celles-ci.

10. Procédé selon l'une des revendications précédentes, l'au moins un marquage (3 ; 4) étant effectué par interaction d'un faisceau laser avec le verre du tube de verre semi-fini, l'au moins un marquage (3 ; 4) étant effectué dans une paroi du tube de verre semi-fini, en particulier sous forme de code matriciel numérique (CMN) de préférence par interaction d'un faisceau laser avec le verre du tube de verre semi-fini à des températures supérieures à la température de transformation du verre.

11. Procédé selon la revendication 9 ou 10, l'au moins un marquage (3 ; 4) étant lu optiquement et sans contact afin de lire les données (2-5 ; 30-31) spécifiques au tube de verre semi-fini (1).

12. Procédé selon l'une des revendications précédentes, dans lequel
au moins un tube de verre semi-fini est mesuré et évalué avant le traitement ultérieur, et
des grandeurs mesurées et des données d'évaluation étant comparées aux données spécifiques à l'au moins un tube de verre semi-fini afin de déterminer une information d'écart,
l'au moins un paramètre de processus, qui est utilisé lors du traitement ultérieur d'une pluralité de tubes de verre semi-finis incluant la déformation thermique effectuée au moins par endroits, étant commandé en fonction des données (2-5 ; 30-31) spécifiques aux tubes de verre semi-finis respectifs avec prise en compte de l'information d'écart déterminée.

13. Procédé selon l'une des revendications précédentes,
le traitement ultérieur du tube de verre semi-fini (1) comprenant un chauffage local d'une portion du tube de verre semi-fini et le découpage d'un récipient par tronçonnage du tube de verre semi-fini au niveau de la portion chauffée localement d'un fond du récipient, le découpage du récipient du tube en verre semi-fini comprenant en outre de préférence :
le préformage d'un col du récipient, la réception la tête la première des récipients d'un dispositif de retenue et le formage progressif du fond du récipient du tube de verre semi-fini par affaissement d'une paroi du tube de verre.

14. Procédé selon la revendication 13, comprenant en outre un traitement ultérieur du fond du récipient, le procédé comprenant l'une au moins des étapes suivantes :
traiter le fond du récipient avec au moins un brûleur pour former grossièrement le fond ;
effectuer un traitement ultérieur du fond avec au moins un brûleur pour aplatir le fond ;
presser le fond dans une matrice de formage par application d'une pression de gaz, en particulier dans la gamme de 0,5 à 3,0 bars, pour conférer une forme finale au fond ;
refroidir le fond.

15. Procédé selon la revendication 13 ou 14, le traitement ultérieur du tube de verre semi-fini (1) comprenant en outre un tri ou un stockage intermédiaire temporaire d'un tube de verre semi-fini si l'on détermine sur la base des données spécifiques au tube de verre semi-fini que le traitement ultérieur du tube de verre semi-fini avec les paramètres de processus actuels n'est pas possible,
le tube de verre semi-fini étant de préférence soumis à un traitement ultérieur après le stockage intermédiaire temporaire, le tube de verre semi-fini étant soumis à un traitement ultérieur après le stockage intermédiaire temporaire de préférence avec des paramètres de processus modifiés qui sont déterminés sur la base des données spécifiques au tube de verre semi-fini.

16. Procédé selon l'une des revendications 13 à 15, le récipient étant un récipient destiné à recevoir des substances pharmaceutiques, médicales ou cosmétiques, en particulier un flacon, une carpule ou un corps de seringue.
